# EUROPEAN PATENT SPECIFICATION

(11) **EP 2 865 973 B1**
(45) Date of publication and mention of the grant of the patent: **14.08.2019**
(21) Application number: 13806834.1
(22) Date of filing: 20.06.2013
(51) Int. Cl.: F25D 23/08, F16L 59/06, F25D 23/06, B29C 44/12, B29C 44/58, B32B 5/20, B32B 1/00, C08J 9/00, F16L 59/02, B29K 105/04

(54) **HEAT-INSULATING WALL, HEAT-INSULATING BOX AND METHOD FOR PRODUCING THE SAME**
WÄRMEISOLIERENDE WAND, WÄRMEISOLIERENDER KASTEN UND VERFAHREN ZUR HERSTELLUNG DAVON
PAROI D'ISOLATION THERMIQUE, BOÎTE D'ISOLATION THERMIQUE ET SON PROCÉDÉ DE PRODUCTION

(30) Priority: 20.06.2012 JP 2012138910; 25.12.2012 JP 2012280672
(43) Date of publication of application: 29.04.2015
(60) Divisional application: 19183478.7
(73) Proprietor: Panasonic Intellectual Property Management Co., Ltd., Osaka-shi, Osaka 540-6207 (JP)
(72) Inventor: HIRAI, Tsuyoki, Osaka-shi, Osaka 540-6207 (JP); UEKADO, Kazutaka, Osaka-shi, Osaka 540-6207 (JP)
(74) Representative: Eisenführ Speiser
(86) International application number: PCT/JP2013/003873
(87) International publication number: WO 2013/190845

(56) References cited:
- EP-A1- 1 160 524
- JP-A- H02 192 580
- JP-A- H02 192 580
- JP-A- H06 213 561
- JP-A- H07 146 061
- JP-A- H08 311 230
- JP-A- H09 119 771
- JP-A- 2001 248 782
- JP-A- 2006 528 724
- JP-A- 2007 238 141
- JP-A- 2007 238 141
- US-A- 5 618 853
- US-A- 5 618 853
- US-A1- 2010 231 109

## Description

### Technical Field

The present invention relates to a heat-insulating wall, and a heat-insulating box and a method for producing the same.

### Background Art

In recent years, energy saving has been actively promoted as a measure against global warming that is a global environmental problem. Patent Literature 1 proposes a technique in which a heat-insulating space of a heat-insulating box is filled with an "open-cell urethane foam" from an air feeding port for blow molding in the heat-insulating box and the urethane foam is foamed, followed by evacuating the inside of the heat-insulating box to vacuum using a vacuum exhaust apparatus connected to the air feeding port. The "open-cell" refers to a structure in which respective cells communicate with one another. The "closed-cell" refers to a structure in which respective cells are independent and do not communicate with one another.
EP 1 160 524 A1 teaches a heat-insulating wall and a method for producing a heat-insulating box.

### Citation List

### Patent Literature

PTL 1: JP 9-119771 A

### Summary of Invention

### Technical Problem

From the point of view described below, the present inventors have found that the above-mentioned previous technique has the following problem. That is, the above-mentioned previous technique does not indicate a method for uniformly filling a heat-insulating space with an open-cell urethane foam. Thus, the previous technique has the problem that the external appearance of a heat-insulating box is deformed by a non-uniformly filled open-cell urethane foam and a gas released from a closed cell in an open-cell urethane foam.

The previous technique does not disclose a method for preventing ingress of moisture into a heat-insulating space after the heat-insulating space is filled with an open-cell urethane foam. Thus, the previous technique has the problem that an open-cell urethane foam is degraded by ingress of moisture, leading to deterioration of heat-insulating performance of a heat-insulating box.

The present invention has been devised for solving the above-mentioned problem. An object of the present invention is to provide a heat-insulating wall which can resist deformation of an external appearance and deterioration of heat-insulating properties, a heat-insulating housing and a method for producing the same.

### Solution to Problem

For achieving the above-mentioned object, a heat-insulating wall according to the present invention is defined by claim 1.

### Advantageous Effects of Invention

According to the present invention, there are provided a heat-insulating wall according to claim 1 and a method for producing a heat-insulating box according to claim 10.

The foregoing object, other objects, features and advantages of the present invention will become apparent from the following detailed descriptions of preferred embodiments with reference to the accompanying drawings.

### Brief Description of Drawings

Fig. 1A is a front view of a refrigerator including a heat-insulating box according to Embodiment 1 of the present invention.
Fig. 1B is a local sectional view showing a part of the refrigerator taken along line A-A in Fig. 1A.
Fig. 2A is a view schematically showing an example of a structure of an open-cell urethane foam shown in Fig. 1A.
Fig. 2B is an enlarged photograph showing a state between a pair of cells in the open-cell urethane foam shown in Fig. 1A.
Fig. 2C is a view for explaining a configuration between a pair of cells shown in Fig. 2B.
Fig. 2D is an enlarged photograph showing a state in which a first through-hole is formed in a cell film portion in Fig. 2B.
Fig. 2E is a view for explaining a configuration of the cell film portion and first through-hole shown in Fig. 2D.
Fig. 2F is an enlarged photograph showing a state of the cell skeleton portion in Fig. 2B.
Fig. 2G is a view for explaining a state of the cell skeleton portion shown in Fig. 2F.
Fig. 2H is an enlarged photograph showing further in detail a state in which a second through-hole is formed in the cell skeleton portion shown in Fig. 2F.
Fig. 2I is a view for explaining a configuration of the cell skeleton portion and second through-hole shown in Fig. 2H.
Fig. 3 is a flow chart showing an example of construction of the refrigerator shown in Fig. 1A.
Fig. 4 is a sectional view for explaining integral foaming/molding of the heat-insulating box shown in Fig. 1A.
Fig. 5A is a view showing a method 1 for sealing an air hole of the refrigerator shown in Fig. 1A.
Fig. 5B is a local sectional view showing a part of the refrigerator taken along line B-B in Fig. 1A.
Fig. 6A is a view showing a method 2 for sealing the air hole of the refrigerator shown in Fig. 1A.
Fig. 6B is a local sectional view showing a part of the refrigerator taken along line C-C in Fig. 6A.
Fig. 7A is a view showing a method 3 for sealing the air hole of the refrigerator shown in Fig. 1A.
Fig. 7B is a local sectional view showing a part of the refrigerator taken along line D-D in Fig. 7A.
Fig. 8A is a view showing a method 1 for sealing a urethane liquid injection port of the refrigerator shown in Fig. 1A.
Fig. 8B is a local sectional view showing a part of the refrigerator taken along line E-E in Fig. 8A.
Fig. 9A is a view showing a method 2 for sealing the urethane liquid injection port of the refrigerator shown in Fig. 1A.
Fig. 9B is a local sectional view showing a part of the refrigerator taken along line F-F in Fig. 9A.
Fig. 10 is a flow chart of construction of a refrigerator including a heat-insulating box according to Embodiment 2 of the present invention.
Fig. 11A is a view showing a method for sealing a urethane liquid injection port also used as an exhaust hole in the refrigerator including a heat-insulating box shown in Fig. 10.
Fig. 11B is a local sectional view showing a part of the refrigerator taken along line G-G in Fig. 11A.
Fig. 12 is a front view of a refrigerator including a heat-insulating box according to Embodiment 3 of the present invention.
Fig. 13 is a sectional view of a gas adsorbing device shown in Fig. 12.
Fig. 14 is a sectional view for explaining integral foaming/molding of a heat-insulating box according to Embodiment 4 of the present invention.
Fig. 15 is a sectional view showing a heat-insulating wall (heat-insulating box) according to another embodiment of the present invention.
Fig. 16 is a sectional view showing a heat-insulating box according to another embodiment of the present invention.

### Description of Embodiments

A heat-insulating wall according to a first aspect of the present invention as defined in claim 1 includes i.a.: a wall body whose hollow portion is a heat-insulating space; a gas circulation port which is disposed on the wall body and through which the heat-insulating space communicates with the outside; an open-cell urethane foam of a thermosetting urethane resin with which the heat-insulating space is filled by integral foaming; and a sealing material for sealing the gas circulation port, wherein the open-cell urethane foam includes: a core layer; and a skin layer formed in the vicinity of an interface with the wall body and surrounding the core layer, each of the core layer and the skin layer includes: a plurality of cells; a cell film portion which is formed at a location where the cells are adjacent to one another; a cell skeleton portion which is formed at a location where the cells are adjacent to one another and which is formed in such a manner that a distance between the adjacent cells is greater than a thickness of the cell film portion; a first through-hole formed so as to extend through the cell film portion; and a second through-hole formed so as to extend through the cell skeleton portion, the skin layer contains a larger number of the cell skeleton portions than the core layer, and the plurality of cells communicate with one another through the first through-hole and the second through-hole.

The "gas circulation port" here includes at least one of the later described urethane injection port, air hole and exhaust hole, and the same applies to the following description of the gas circulation port. The "sealing material" includes at least one of the later described air hole sealing material, urethane injection port sealing material and exhaust hole sealing material, and the same applies to the following description of the sealing material.

The gas circulation port, through which the heat-insulating space communicates with the outside, can be used as an injection port for injecting a raw material of the open-cell urethane foam and an air discharge port of the heat-insulating space. Consequently, fluidity of air in the heat-insulating space during injection of a raw material and foaming is secured, and therefore the heat-insulating space is uniformly filled with the open-cell urethane foam. The gas circulation port into which air penetrates from outside is sealed with the sealing material, and therefore ingress of moisture from the gas circulation port is prevented, so that degradation of the open-cell urethane foam due to moisture is prevented. Further, cells in the open-cell urethane foam continuously communicate with one another. Consequently, deformation of the external appearance of the heat-insulating wall can be prevented, and heat-insulating performance can be improved.

The cells communicate with one another through the first through-hole and/or the second through-hole not only in the core layer but also in the skin layer containing a large number of cell skeleton portions. Consequently, deformation of the external appearance and deterioration of heat-insulating properties of the heat-insulating wall can be prevented.

A heat-insulating box according to a second aspect of the present invention may include one or more of the heat-insulating walls according to the first aspect of the present invention, wherein the wall body includes an outer casing and an inner casing stored in the outer casing.

A heat-insulating box according to a third aspect of the present invention may be the heat-insulating box according to the second aspect of the present invention, wherein the gas circulation port includes: an air hole for releasing air from the heat-insulating space in the process of filling the heat-insulating space with the open-cell urethane foam; and a urethane liquid injection port for injecting the raw material of the open-cell urethane foam into the heat-insulating space, and the sealing material includes: an air hole sealing material for sealing the air hole; and a urethane liquid injection port sealing material for sealing the urethane liquid injection port.

In this way, air in the heat-insulating space is discharged from the air hole at the time when the raw material of the open-cell urethane foam is injected from the urethane liquid injection port into the heat-insulating space and at the time when the raw material is foamed to form an open-cell urethane foam. Thus, an air reservoir is not formed in the heat-insulating space, and therefore the whole of the heat-insulating space can be filled with the open-cell urethane foam. Consequently, prevention of deformation of the external appearance and improvement of heat-insulating performance of the heat-insulating box can be accomplished after formation of the open-cell urethane foam.

By sealing the urethane liquid injection port and the air hole, ingress of air and moisture into the heat-insulating space can be prevented. As a result, deformation of the external appearance of the heat-insulating box can be prevented, and deterioration of heat-insulating performance can be suppressed.

A heat-insulating box according to a fourth aspect of the present invention may be the heat-insulating box according to the third aspect of the present invention, wherein the hole size of the air hole is smaller than the hole size of the urethane liquid injection port.

In this way, leakage of the raw material of the open-cell urethane foam from the air hole can be suppressed.

A heat-insulating box according to a fifth aspect of the present invention may be the heat-insulating box according to the third or fourth aspect of the present invention, wherein the air hole is provided in the inner casing, and the urethane liquid injection port is provided in the outer casing.

In this way, the air hole and the urethane liquid injection port can be separately disposed in the inner casing and the outer casing, respectively, so as to secure fluidity of the raw material of the open-cell urethane foam and air.

A heat-insulating box according to a sixth aspect of the present invention may be the heat-insulating box according to any one of the third to fifth aspects of the present invention, wherein the gas circulation port further includes an exhaust hole for evacuating the heat-insulating space, and the sealing material further includes an exhaust hole sealing material for sealing the exhaust hole.

In this way, the heat-insulating space filled with the open-cell urethane foam is evacuated through the exhaust hole to form the heat-insulating space into a vacuum heat-insulating layer, so that the heat-insulating properties of the heat-insulating box can be further improved. Further, the exhaust hole is sealed together with the air hole and the urethane liquid injection port to maintain a vacuum degree of the heat-insulating space, so that deterioration of the heat-insulating properties of the heat-insulating box can be suppressed.

A heat-insulating box according to a seventh aspect of the present invention may be the heat-insulating box according to the sixth aspect of the present invention, wherein the urethane liquid injection port is used also as the exhaust hole.

In this way, sealing of the urethane liquid injection port and sealing of the exhaust hole are performed at the same time, so that the number of man-hours for construction of the heat-insulating box can be reduced.

A heat-insulating box according to an eighth aspect of the present invention may be the heat-insulating box according to any one of the second to seventh aspects of the present invention, further including a gas adsorbing device disposed in the heat-insulating space.

In this way, the gas adsorbing device exhibits a gas adsorption function to further easily prevent degradation of the open-cell urethane foam. When the heat-insulating space filled with the open-cell urethane foam is evacuated, the exhaust distance of the open-cell urethane foam is reduced by the gas adsorption function of the gas adsorbing device, so that efficient evacuation can be realized. After the heat-insulating space is evacuated as described above, a very small amount of residual gas present in the heat-insulating space can be adsorbed to the gas adsorbing device, so that the vacuum degree of the heat-insulating space is easily maintained.

A heat-insulating box according to a ninth aspect of the present invention may be one, wherein the gas adsorbing device includes an adsorbent that adsorbs a carbon dioxide gas, and the adsorbent includes ZSM-5 zeolite ion-exchanged with at least one of barium and strontium.

A method for producing a heat-insulating box according to a tenth aspect of the present invention includes: forming a heat-insulating space using a wall body; and injecting a raw material of an open-cell urethane foam into the heat-insulating space, wherein the open-cell urethane foam with which the heat-insulating space is filled by integral foaming/molding of the raw material and the wall body includes: a plurality of cells; a cell film portion which is formed at a location where the cells are adjacent to one another; a cell skeleton portion which is formed at a location where the cells are adjacent to one another and which is formed in such a manner that a distance between the adjacent cells is greater than a thickness of the cell film portion; a first through-hole formed so as to extend through the cell film portion; and a second through-hole formed so as to extend through the cell skeleton portion, the plurality of cells communicate with one another through the first through-hole and the second through-hole, and the raw material includes: a plurality of polyol mixtures of different compositions for forming the first through-hole; a polyisocyanate which undergoes a polymerization reaction with the polyol mixture to generate a thermosetting urethane resin that forms the cell film portion and the cell skeleton portion; a foaming agent for forming the cells; and a powder for forming the second through-hole, the powder being incompatible with the thermosetting urethane resin.

According to this method, when the raw material of the open-cell urethane foam is injected from the gas circulation port into the heat-insulating space, air is discharged from the gas circulation port through which the heat-insulating space communicates with the outside. Thus, the heat-insulating space can be uniformly filled with the open-cell urethane foam.

The raw material of the open-cell urethane foam contains a plurality of polyol mixtures of different compositions, a polyisocyanate, a foaming agent and a powder. Consequently, in the open-cell urethane foam, cells, a first through-hole extending through the cell film portion, and a second through-hole extending through the cell skeleton portion are formed. Consequently, cells can be caused to communicate with one another throughout the open-cell urethane foam.

A method for producing a heat-insulating box according to an eleventh aspect of the present invention may be the method according to the tenth aspect of the present invention, the method further including sealing with a sealing material the gas circulation port which is disposed on the wall body and through which the heat-insulating space communicates with the outside.

According to this method, when the gas circulation port is sealed, ingress of air into the heat-insulating space from outside can be prevented. Thus, degradation of the open-cell urethane foam in the heat-insulating space can be prevented to suppress deformation of the external appearance and deterioration of heat-insulating properties of the heat-insulating box.

A method for producing a heat-insulating box according to a twelfth aspect of the present invention may be the method according to the eleventh aspect of the present invention, wherein the gas circulation port includes: an air hole for releasing air from the heat-insulating space in the process of filling the heat-insulating space with the open-cell urethane foam; and a urethane liquid injection port for injecting the raw material, the sealing material includes: an air hole sealing material for sealing the air hole; and a urethane liquid injection port sealing material for sealing the urethane liquid injection port, and sealing the gas circulation port with the sealing material includes: sealing the air hole with the air hole sealing material after injecting the raw material from the urethane liquid injection port into the heat-insulating space; and sealing the urethane liquid injection port with the urethane liquid injection port sealing material after sealing the air hole.

According to this method, after the raw material is injected and before the air hole is sealed, air in the heat-insulating space is discharged from the air hole, so that the heat-insulating space can be uniformly filled with the open-cell urethane foam. When the urethane liquid injection port is sealed after the air hole is sealed, the heat-insulating space can be airtightly closed, degradation of the open-cell urethane foam by ingress of moisture is prevented.

A method for producing a heat-insulating box according to a thirteenth aspect of the present invention may be the method according to the twelfth aspect of the present invention, wherein the gas circulation port further includes an exhaust hole for evacuating the heat-insulating space filled with the open-cell urethane foam, the sealing material further includes an exhaust hole sealing material for sealing the exhaust hole, the method further includes evacuating the heat-insulating space through the exhaust hole after sealing the air hole, and sealing the gas circulation port with the sealing material further includes sealing the exhaust hole with the exhaust hole sealing material after performing the evacuation.

According to this method, when the heat-insulating space is evacuated from the exhaust hole after the heat-insulating space is filled with the open-cell urethane foam, the heat-insulating space can be formed into a vacuum heat-insulating layer. When the air hole, the urethane liquid injection port and the exhaust hole are sealed, the vacuum degree of the heat-insulating space can be kept high.

A method for producing a heat-insulating box according to a fourteenth aspect of the present invention may be the method according to any one of the tenth to thirteenth aspects of the present invention, the method further including disposing a gas adsorbing device in the heat-insulating space before injecting the raw material.

According to this method, when the raw material of the open-cell urethane foam is injected into the heat-insulating space after the gas adsorbing device is disposed in the heat-insulating space, the open-cell urethane foam and the gas adsorbing device are provided in the heat-insulating space. Thus, the gas adsorbing device exhibits a gas adsorption function, so that degradation of the open-cell urethane foam can be prevented. When the heat-insulating space filled with the open-cell urethane foam is evacuated, the gas adsorbing device adsorbs a gas to reduce the exhaust distance of the open-cell urethane foam, so that efficient evacuation can be realized. Further, the gas adsorbing device adsorbs a very small amount of residual gas present in the heat-insulating space after evacuation, so that the vacuum degree of the heat-insulating space is further easily maintained.

Embodiments of the present invention will be described below with reference to the drawings. Hereinafter, the same or equivalent elements will be given the same reference symbol throughout all the drawings, and duplicate explanations thereof will be omitted unless otherwise specified.

### Embodiment 1

### [Example of Structure of Refrigerator]

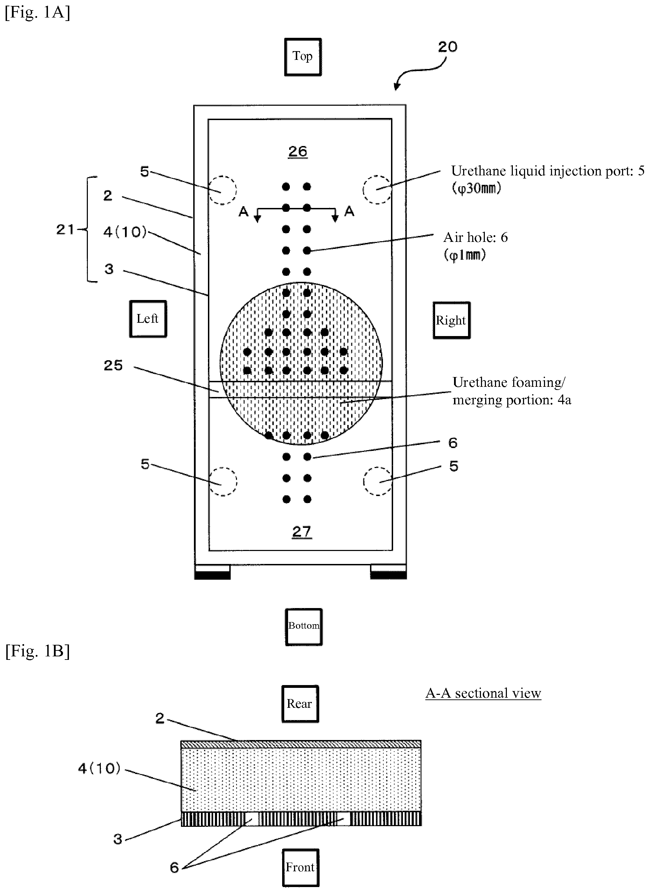

Fig. 1A is a front view of a refrigerator 20 including a heat-insulating box 21 according to Embodiment 1 of the present invention. Fig. 1B is a local sectional view showing a part of the refrigerator 20 taken along line A-A in Fig. 1A. In Figs. 1A and 1B, the height direction of the refrigerator 20 is a vertical direction, the width direction of the refrigerator 20 is a horizontal direction, and the thickness direction of the refrigerator 20 is a longitudinal direction.

As shown in Fig. 1A, the refrigerator 20 includes the heat-insulating box 21, and a door (not illustrated) mounted on the heat-insulating box 21. The heat-insulating box 21 is a box-shaped container that is opened at the front, and has an internal space. The internal space is partitioned into, for example, a refrigerator compartment 26 on the upper side and a freezer compartment 27 on the lower side by a partition plate 25. A single-opening-type or double-opening-type swing door (not illustrated) is attached on the heat-insulating box 21 so as to openably close the refrigerator compartment 26. A drawer-type door (not illustrated) is attached on the heat-insulating box 21 so as to openably close the freezer compartment 27 in the longitudinal direction. A refrigeration cycle (not illustrated) provided with a compressor, an evaporator and a condenser is attached on the refrigerator 20. The internal space of the refrigerator 20 is not necessarily partitioned into the refrigerator compartment 26 and the freezer compartment 27. For example, the internal space of the refrigerator 20 may be partitioned by a plurality of partition plates into storage compartments which are used for different purposes (refrigerator compartment, freezer compartment, ice compartment, vegetable compartment and so on).

The heat-insulating box 21 includes one or more heat-insulating walls. In this embodiment, the heat-insulating box 21 includes one heat-insulating wall, and therefore the heat-insulating wall has the overall shape of the heat-insulating box 21. For example, when the heat-insulating wall has a flat-plate shape, the box-shaped heat-insulating box 21 may be formed by combining a plurality of heat-insulating walls.

The heat-insulating box 21 includes a hollow wall body, and an open-cell urethane foam 4 with which the heat-insulating space in the wall body is filled. The open-cell urethane foam 4 forms a core material of a heat-insulating layer in the heat-insulating box 21. The wall body includes an outer casing 2 and an inner casing 3 stored in the outer casing. For example, when the refrigerator has a complicated shape like a household refrigerator, the outer casing 2 is formed of a metal (e.g. iron), and the inner casing 3 is formed of a resin such as a hard resin (e.g. ABS (acrylonitrile butadiene styrene) resin). When the refrigerator has a simple shape like a refrigerator for business, both the outer casing 2 and the inner casing 3 may be formed of a metal. Further, both the outer casing 2 and the inner casing 3 may be formed of a resin. A space between the outer casing 2 and the inner casing 3, i.e. a hollow portion in the wall body is used as a heat-insulating space. The wall body is not necessarily formed of two components: the outer casing 2 and the inner casing 3 as long as it has a heat-insulating space at the inside thereof. For example, the wall body may be formed of one or three or more components.

On the back plate of the outer casing 2 (back plate of refrigerator 20), for example, a urethane liquid injection port 5 is disposed at each of total four locations: an upper right part, an upper left part, a lower right part and a lower left part of the outer casing 2. The urethane liquid injection port 5 is a gas communication port which extends through the back plate of the outer casing 2 to establish communication between the heat-insulating space 10 and the outside. The urethane liquid injection port 5 is used for injecting a raw material (urethane liquid) of the open-cell urethane foam 4. The urethane liquid injection ports 5 at four locations are horizontally symmetrically disposed at the back plate of the outer casing 2. Urethane liquids injected from the urethane liquid injection ports 5 merge at substantially the central part of the heat-insulating space 10 between the outer casing 2 and the inner casing 3 of the refrigerator 20. Hereinafter, a hollow portion of the refrigerator 20 at which urethane liquids injected from the urethane liquid injection ports 5 merge is referred to as a urethane foaming/merging portion 4a. The urethane foaming/merging portion 4a is circularly formed exclusively at one location, i.e. the central part of the refrigerator 20. The number and disposition of the urethane liquid injection ports 5 is not limited to the foregoing four locations as long as the urethane foaming/merging portion 4a is formed exclusively at one location, i.e. the central part.

A plurality of air holes 6 are intensively disposed at a location on the back plate of the inner casing 3, which corresponds to the urethane foaming/merging portion 4a. The air hole 6 is a gas communication port which extends through the back plate of the inner casing 3 to establish communication between the heat-insulating space 10 and the outside. For example, the air hole 6 is used for discharging air in the heat-insulating space 10 during injection of the urethane liquid and during foaming of the urethane liquid. A plurality of air holes 6 are also disposed at a location on the back plate of the inner casing 3, which is closely adjacent to the urethane foaming/merging portion 4a. For example, the number of air holes 6 standing in a row in the horizontal direction increases from 2 to 4 to 6 in order toward the urethane foaming/merging portion 4a from the upper side (refrigerator compartment 26 side) at the back plate of the inner casing 3. On the other hand, the number of air holes 6 standing in a row in the horizontal direction increases from 2 to 4 toward the urethane foaming/merging portion 4a from the lower side (freezer compartment 27 side) at the back plate of the inner casing 3. The total number of these air holes 6 is, for example, 40.

The hole size of the air hole 6 is made smaller than the hole size of the urethane liquid injection port 5 for prevention of leakage of a urethane liquid, etc. Specifically, the urethane liquid injection port 5 is connected to the tip of a liquid feeding hose 41 of a urethane liquid feeding device 40 described later. Thus, the hole size of the urethane liquid injection port 5 corresponds to the hole size of the tip of the liquid feeding hose 41, and is set to, for example, 30 mm. On the other hand, the hole size of the air hole 6 is set to, for example, 1.0 mm. When the air hole 6 has a hole size of 1.0 (mm) or more, the urethane liquid is easily leaked. On the other hand, when the air hole 6 has a hole size of 0.5 (mm) or less, the pumping effect is reduced. Thus, by employing a hole size of 1.0 (mm) as the hole size of the air hole 6, the pumping effect can be improved with a smallest possible number of air holes while the urethane leakage defect is suppressed.

An air duct cover or the like may be provided in consideration of the design of the interior of the refrigerator 20. The air hole 6 disposed on the back plate of the inner casing 3 is screened from the human eye by the air duct cover. The air hole 6 is disposed on the back plate of the inner casing 3 for improving the external appearance design of the refrigerator 20, but may be disposed on the back plate of the outer casing 2.

### [Example of Structure of Open-Cell Urethane Foam and Raw Material thereof (Urethane Liquid)]

The open-cell urethane foam 4 is an open-cell resin body formed of a thermosetting resin, and the heat-insulating space 10 is filled with the open-cell urethane foam 4 by integral foaming in the heat-insulating space 10. Here, the "integral foaming" means that a raw material of the open-cell urethane foam 4 (urethane liquid) is injected into the heat-insulating space 10 formed of at least a part of the wall body, and the raw material is foamed and solidified in the heat-insulating space 10. The integral foaming molded article is the heat-insulating box 21 integrally formed by sticking the open-cell urethane foam 4 to the wall bodies 2 and 3 as a skin material.

The open-cell urethane foam 4 retains the heat-insulating space 10 between the outer casing 2 and the inner casing 3 by supporting the outer casing 2 and the inner casing 3 while thermally insulating the outer casing 2 and the inner casing 3 from each other. That is, the open-cell urethane foam 4 functions as a core material (core member). The porosity of the open-cell urethane foam 4 is, for example, 95% or more. As the porosity increases, the heat-insulating properties of the open-cell urethane foam 4 are improved, but the mechanical strength for supporting the outer casing 2 and the inner casing 3 is reduced. Thus, a porosity of the open-cell urethane foam 4 is determined in consideration of heat-insulating properties and mechanical strength.

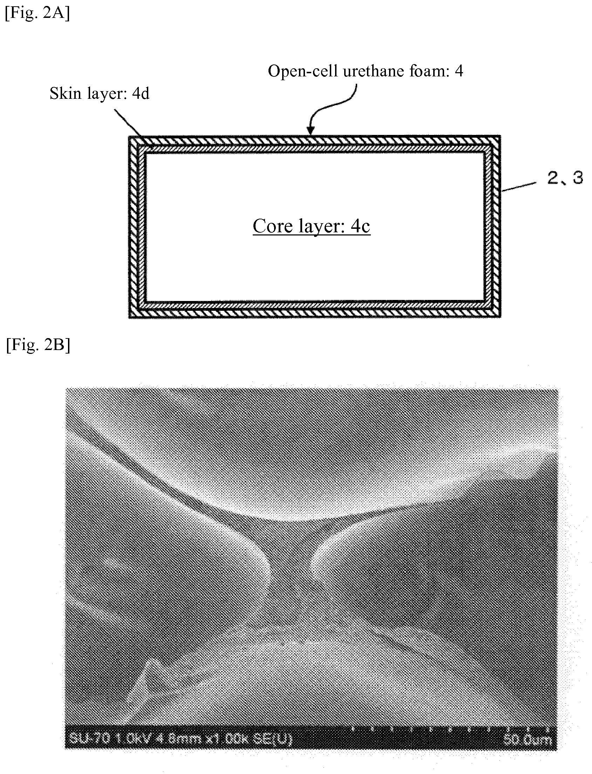

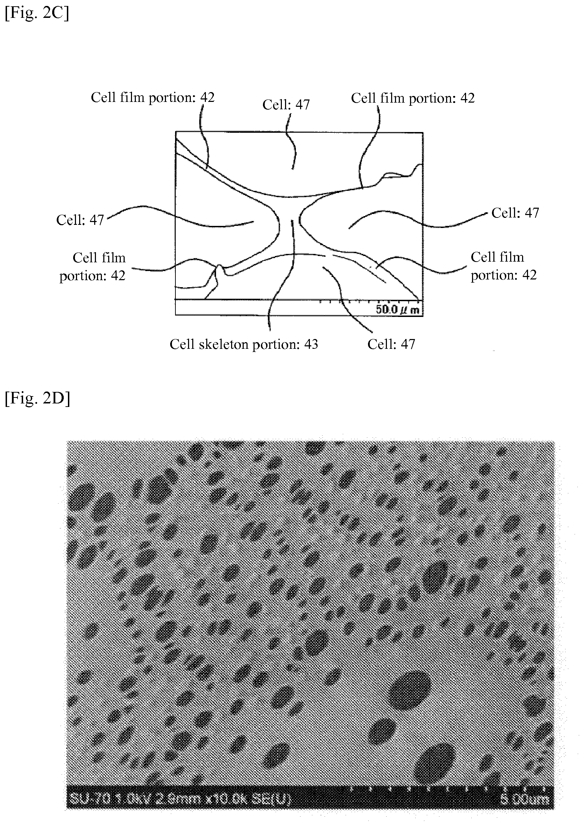

Fig. 2A is a view schematically showing an example of a structure of the open-cell urethane foam 4 shown in Fig. 1A. As shown in Fig. 2A, the open-cell urethane foam 4 has a core layer 4c, and a skin layer 4d that covers the outer circumference of the core layer 4c. The core layer 4c includes a larger number of cells 47 as compared to the skin layer 4d (Figs. 2B and 2C), and therefore has a density lower than that of the skin layer 4d. The core layer 4c is situated at the central part of the open-cell urethane foam 4. The skin layer 4d is formed in the vicinity of the inner surfaces of the outer casing 2 and the inner casing 3.

Fig. 2B is an enlarged photograph showing a state between a pair of cells 47 in the open-cell urethane foam 4 shown in Fig. 2A. Fig. 2C is a view for explaining a configuration between a pair of cells 47 shown in Fig. 2B. The core layer 4c and the skin layer 4d shown in Fig. 2A include a plurality of cells 47, cell film portions 42 and cell skeleton portions 43 as shown in Figs. 2B and 2C, respectively. The ratio of cell film portions 42 is greater in core layer 4c than in the skin layer 4d. The ratio of cell skeleton portions 43 is greater in the skin layer 4d, in which foaming is less sufficient, than in the core layer 4c. Thus, the ratio of cell skeleton portions 43 to cell film portions 42 is higher in the skin layer 4d than in the core layer 4c.

The cell 47 is a fine cell of, for example, less than 1000 µm as shown in Figs. 2B and 2C. Cells 47 communicate with one another through the later-described first through-hole 44 and second through-hole 45, and therefore cells 47 are continuous. As cells 47 become smaller and more continuous, the length of the heat transfer route in the open-cell urethane foam 4 increases to improve the heat-insulating properties of the open-cell urethane foam 4 as long as the density of the open-cell urethane foam 4 is fixed. However, as the size of the cell 47 decreases, the fluid resistance (exhaust resistance) at the time of decompressing the internal space of cells 47 etc. in the open-cell urethane foam 4 increases, leading to an increase in power and time for exhausting air. Accordingly, a size of the cell 47 is determined in consideration of the heat-insulating properties and exhaust efficiency of the open-cell urethane foam 4.

The cell film portion 42 is formed at a location where cells 47 are closely adjacent to one another, and formed in a film shape between a pair of cells 47 facing each other. The thickness of the cell film portion 42 (distance between two cells 47 with the cell film portion 42 sandwiched therebetween) is, for example, as small as about 3 µm as typically shown in the right upper part and the left lower part of Figs. 2B and 2C.

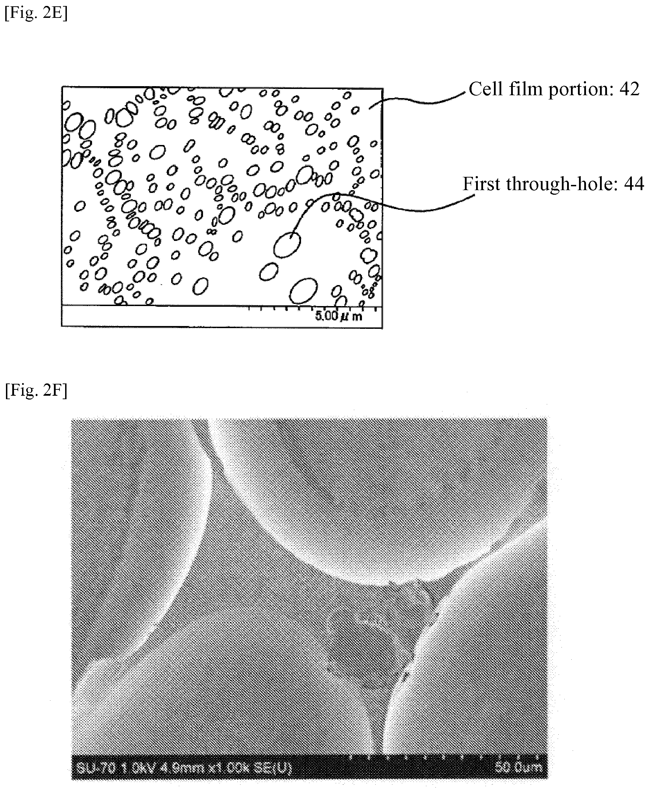

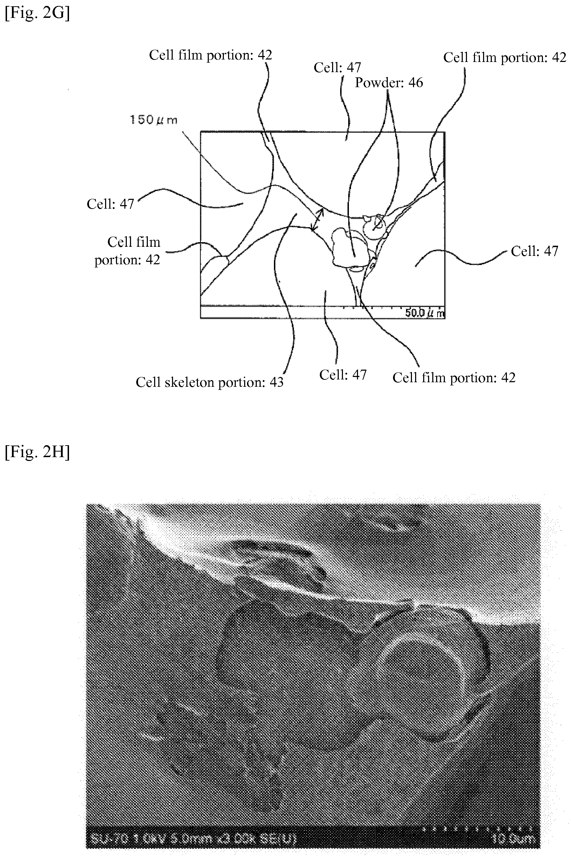

The cell skeleton portion 43 is formed at a location where cells 47 are adjacent to one another as typically shown in the central part of Figs. 2B and 2C. The thickness of the cell skeleton portion 43 (distance between a pair of cells 47) is larger than that of the cell film portion 42, and is, for example, as large as about 150 µm (Figs. 2F and 2G). Thus, cell skeleton portion 43 is formed among a plurality of cells 47 facing one another. The cell film portion 42 between a pair of cells 47 and the cell film portion 42 between another pair of cells 47 are continuous at the cell skeleton portion 43.

Here, according to the definition the "cell film portion" and "cell skeleton portion", a region which does not belong either to the "cell film portion" or the "cell skeleton portion" may exist in the open-cell urethane foam 4 due to variations in state of foaming. The open-cell urethane foam 4 may include a region where foaming is insufficient. Such a region may have a state in which cells 47 are dispersed in a bulk resin.

The first through-hole extends through the cell film portion 42, and the second through-hole extends through the cell skeleton portion 43. Consequently, in the open-cell urethane foam 4, all cells 47 communicate with one another. All cells 47 are not necessarily exactly all the cells 47 existing in the open-cell urethane foam 4. A very small number of cells 47 that do not communicate with one another may remain due to variations in state of foaming, etc. as described above.

Fig. 2D is an enlarged photograph showing a state of the first through-hole 44 in the cell film portion 42 in Fig. 2B. Fig. 2E is a view for explaining a configuration of the cell film portion 42 and first through-hole 44 shown in Fig. 2D.

The first through-hole 44 extends through the cell film portion 42 as shown in Figs. 2D and 2E. Figs. 2D and 2E show a surface of the cell film portion 42 (interface between the cell 47 and the cell film portion 42) as seen from the inside of the cell 47. The first through-hole 44 causes mutually closely adjacent cells 47 to communicate with one another. For example, the first through-hole 44 is formed as distortion occurs at a molecular level as a result of performing foaming by using a plurality of polyols having different compositions as described later.

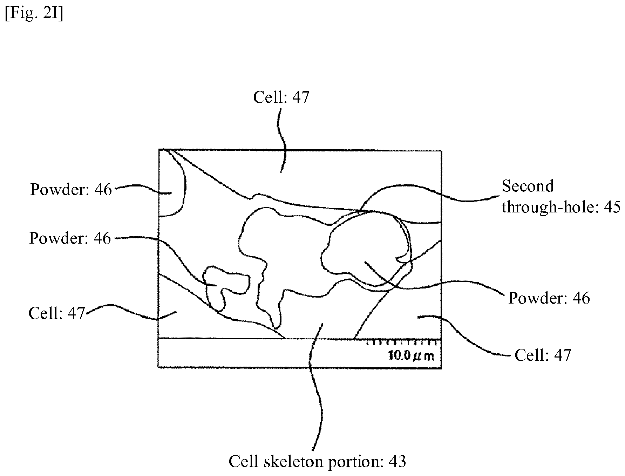

Fig. 2F is an enlarged photograph showing a state of the cell skeleton portion 43 in Fig. 2B. Fig. 2G is a view for explaining a configuration of the cell skeleton portion 43 shown in Fig. 2F. Fig. 2H is an enlarged photograph showing further in detail a state of the cell skeleton portion 43 shown in Fig. 2F. Fig. 2I is a view for explaining a configuration of the cell skeleton portion 43 shown in Fig. 2H.

As shown in Figs. 2H and 2I, the second through-hole 45 is formed at an interface between a powder 46 and a urethane resin (open-cell resin) that forms the open-cell urethane foam 4. The second through-hole 45 extends through the cell skeleton portion 43 to cause mutually separately adjacent cells 47 to communicate with one another. The diameter size and length size of the second through-hole 45 are greater than the diameter size and length size of the first through-hole 44. For example, the second through-hole 45 is formed as the incompatible powder 46 is not adhered to the urethane resin.

The raw material of the open-cell urethane foam 4 (urethane liquid) is one obtained by mixing thermosetting urethane resin components (first resin component and second resin component), a foaming agent and the powder 46. The first resin component is, for example, a mixture of a plurality of polyols (three polyols in this embodiment), and these polyols have different compositions. The second resin component is a polyisocyanate, and for example, a polymethylene polyphenyl polyisocyanate is used as the isocyanate. For example, water is used for the foaming agent. The powder 46 is a fine powder that is dispersed in the open-cell urethane foam 4. The particle size of the powder 46 is smaller than the size of the cell 47, for example less than 1000 µm, particularly preferably, for example 10 to 30 µm. The powder 46 is incompatible with the resin of the open-cell urethane foam 4, and has a SP value of, for example, 9.5 or less. For the powder 46, a polyethylene (PE), nylon (Ny-12) or the like is used. The SP value of the urethane resin (resin of open-cell urethane foam 4) is, for example, 10 to 11. Thus, the urethane resin and the powder 46 are harder to be adhered to each other as the difference between the SP value of the urethane resin and the SP value of the powder 46 becomes greater. Consequently, the second through-hole 45 is formed between the urethane resin and the powder 46. Additives such as a foam stabilizer, a catalyst, a flame retardant, an antioxidant, a colorant and a viscosity-reducing agent may be added to the urethane liquid as necessary.

### [Example of Construction of Refrigerator]

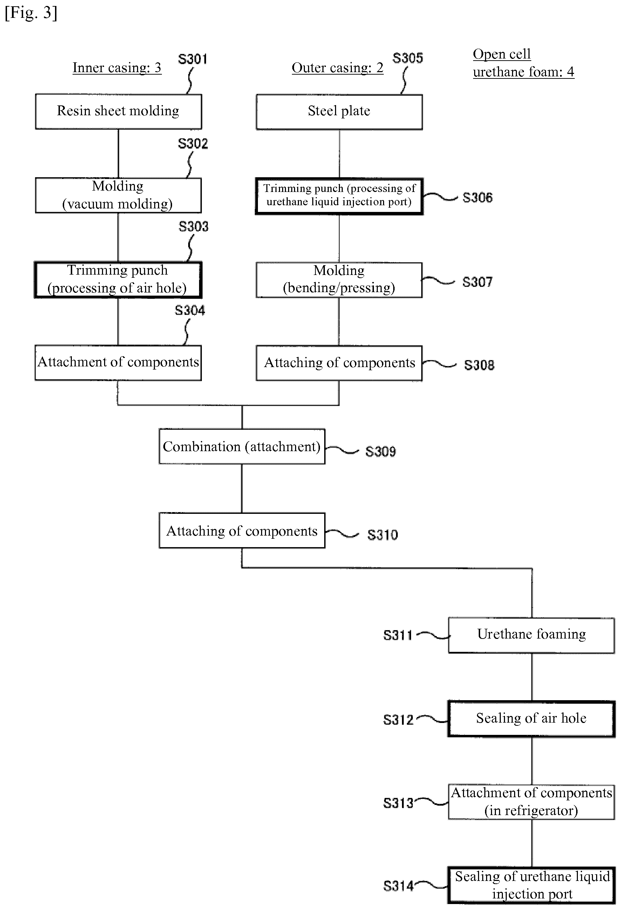

Fig. 3 is a flow chart showing an example of construction of the refrigerator 20 shown in Fig. 1A. As shown in Fig. 3, the inner casing 3 and the outer casing 2 are independently prepared for the heat-insulating box (heat-insulating housing) 21 of the refrigerator 20.

For the inner casing 3, first a hard resin such as an ABS resin is molded into a sheet (step: S301). This hard resin sheet is vacuum-molded into the inner casing 3 having a desired box shape (step: S302). Specifically, hard resin sheet is heated, and the sheet is pressed against a mold of the inner casing 3 before the softened sheet is cooled and solidified. Air is released from a hole of the mold to bring the inside of the mold into a vacuum state, so that the sheet is caused to come into close contact with the mold. Consequently, a desired box shape as the inner casing 3 is obtained.

Next, the back plate of the box-shaped inner casing 3 is punched by a trimming punch to form the air hole 6 at each location where the air hole 6 is to be disposed as shown in Fig. 1A (step: S303). Predetermined components for the refrigerator 20, which should be attached to the inner casing 3 before the inner casing 3 and the outer casing 2 are combined, are attached to the inner casing 3 (step: S304).

For the outer casing 2, a metallic steel plate is provided (step: S305). The steel plate is punched by a trimming punch to form the urethane liquid injection port 5 at each location where the urethane liquid injection port 5 is to be disposed as shown in Fig. 1A (step: S306). The steel plate after punching is subjected to press molding such as bending to mold the steel plate into a desired box shape as the outer casing 2 (step: S307). Predetermined components for the refrigerator 20, which should be attached to the outer casing 2 before the inner casing 3 and the outer casing 2 are combined, are attached to the outer casing 2 (step: S308).

The inner casing 3 and the outer casing 2 prepared as described above are combined to form a wall body (step: S309). Specifically, a flange formed at the front part of the side surface of the inner casing 3 is fitted in a groove portion formed at the front part of the side surface of the outer casing 2. Consequently, the inner casing 3 is mounted in the outer casing 2 to form a hollow wall body, and this internal space is formed as a heat-insulating space 10. Predetermined components for the refrigerator 20, which should be attached before the heat-insulating space 10 is filled with the open-cell urethane foam 4, are attached to wall bodies 2 and 3 (step: S310).

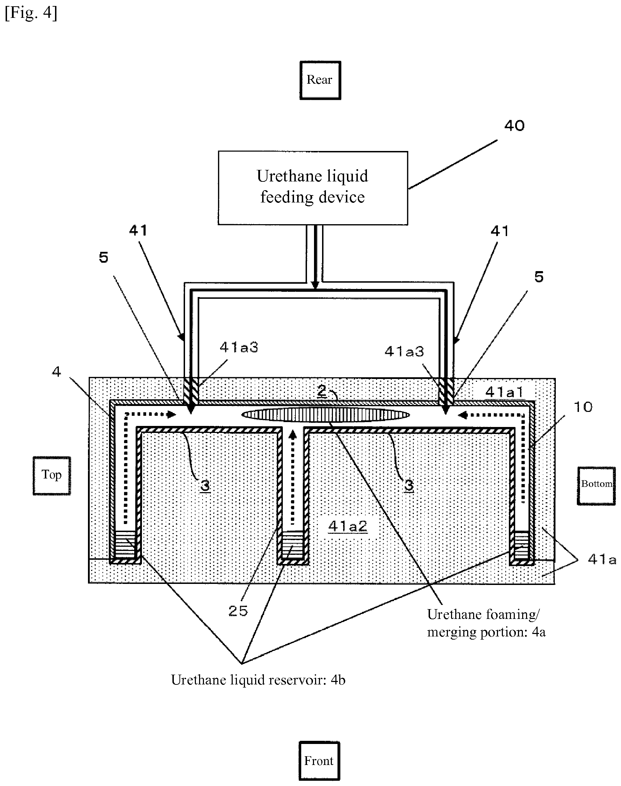

Next, the open-cell urethane foam 4 is subjected to integral foaming/molding in the heat-insulating space 10 between the outer casing 2 and the inner casing 3 (step: S311). The integral foaming/molding will be described with reference to Fig. 4. Fig. 4 is a sectional view for explaining integral foaming/molding of the heat-insulating box 21 using a urethane foaming tool 41a. Two urethane liquid injection ports 5 in Fig. 4 represent two urethane liquid injection ports 5 at upper and lower locations on the right side as shown in Fig. 1A. As shown in Fig. 4, the two urethane liquid injection ports 5 are situated at the rear side from each of urethane liquid reservoir portions 4b at three locations. For two urethane liquid injection ports 5 at upper and lower locations on the left side as shown in Fig. 1A, a urethane liquid is injected similarly to the urethane liquid injection ports 5 on the right side.

The urethane foaming tool 41a is a tool for supporting wall bodies 2 and 3 during integral foaming/molding, and includes, for example, a first tool 41a1 and a second tool 41a2. The first tool 41a1 is provided with a depression so as to support the wall body on the outer casing 2 side. The depression has a shape conforming to the rear surface of the outer casing 2, i.e. a shape corresponding to the rear surface of the heat-insulating box 21. The first tool 41a1 is provided with a perforation 41a3 at a position which corresponds to the urethane liquid injection port 5 of the outer casing 2 when the box is fitted in the depression. Consequently, the heat-insulating space 10 can communicate with the outside through the urethane injection port 5 and the perforation 41a3 even when wall bodies 2 and 3 are covered with the urethane foaming tool 41a. The second tool 41a2 is provided with a depression so as to support the wall body on the inner casing 3 side. The depression has a shape conforming to the front surface of the inner casing 3, i.e. a shape corresponding to the front surface of the heat-insulating box 21 including the partition plate 25. The second tool 41a2 is provided with a perforation (not illustrated) at a position which corresponds to the air hole 6 of the inner casing 3 when the box is fitted in the depression. Consequently, the heat-insulating space 10 can communicate with the outside through the air hole 6 and the perforation even when wall bodies 2 and 3 are covered with the urethane foaming tool 41a.

When the urethane foaming tool 41a is used to perform integral foaming/molding, first the wall body is covered with the first tool 41a1 such that the inner casing 3 side of the wall body is fitted in the depression of the second tool 41a2 and the outer casing 2 side of the wall body is fitted in the depression of the first tool 41a1. Consequently, the entire surface of the wall body is supported by the urethane foaming tool 41a, so that the wall body can be prevented from being deformed at the time of filling and foaming of the urethane liquid.

The urethane liquid injection port 5 communicates with the perforation 41a3, and the air hole 6 communicates with the perforation of the second tool 41a2. Thus, the tip of a liquid feeding hose 41 of a urethane liquid feeding device 40 is connected to the urethane liquid injection port 5 through the perforation 41a3. The urethane liquid is injected to each of the urethane liquid injection ports 5 at two locations from the urethane liquid feeding device 40 through the liquid feeding hose 41. The amounts of urethane liquids that fed to the urethane liquid injection ports 5 at two locations may be the same, or may be individually adjusted so that the heat-insulating space 10 is filled with the urethane liquid uniformly.

The urethane liquid flows into the heat-insulating space 10 from each of the urethane liquid injection ports 5 at two locations, flows into urethane liquid reservoir portions 4b at three locations on the front side from the urethane liquid injection ports 5, and is stored in the urethane liquid reservoir portions 4b. The components of the urethane liquid are mixed, and a polyol mixture as the first resin component and a polyisocyanate as the second resin component undergo a polymerization reaction to form a thermosetting urethane resin. The foaming agent is vaporized by heat generated in the polymerization reaction, so that cells 47 are formed in the urethane resin. A plurality of polyols having different compositions cause distortion at a molecular level, so that the first through-hole 44 is formed in the cell film portion 42 as shown in Figs. 2D and 2E. Further, as shown in Figs. 2H and 2I, the second through-hole 45 is formed between the thermosetting urethane resin and the powder 46, and the second through-hole 45 extends through the cell skeleton portion 43. In this manner, the open-cell urethane foam 4 is formed.

At this time, as shown in Fig. 4, the open-cell urethane foam 4 expands from each urethane liquid reservoir portion 4b toward the urethane liquid injection port 5 while thrusting aside air existing in the heat-insulating space 10, and is formed into a solid phase. The open-cell urethane foam 4 moves toward the rear side from each of the urethane liquid reservoir portions 4b at three locations, merges at the urethane foaming/merging portion 4a, and fills the heat-insulating space 10 uniformly. The thrust air merges at the urethane foaming/merging portion 4a, and is exhausted from the urethane foaming/merging portion 4a through the air hole 6 (Fig. 1A). Thus, during filling of the open-cell urethane foam 4, generation of an air reservoir portion in the heat-insulating space 10 is prevented, so that formation of a portion, which is not unfilled with the open-cell urethane foam 4, is suppressed.

Next, a molded article with the heat-insulating space 10 filled with the open-cell urethane foam 4 is taken out from the urethane foaming tool 41a, and each air hole 6 present in the inner casing 3 of the wall body is sealed as shown in Fig. 3 (step S312). Remaining components for the refrigerator 20 are attached to wall bodies 2 and 3 in the refrigerator 20 (step S313). Each urethane liquid injection port 5 in the outer casing 2 of the wall body is sealed (step S314). In this way, the refrigerator 20 is produced.

Timing at which the inner casing 3 and the outer casing 2 are fixed is not particularly limited. For example, the inner casing 3 and the outer casing 2 may be fixed by a sticking member, an adhesive or the like at the time of combining the inner casing 3 and the outer casing 2 (step: S309). Alternatively, the inner casing 3 and the outer casing 2 may be fixed at the time of sealing the urethane liquid injection port 5 (step S314).

### [Method 1 for Sealing Air Hole]

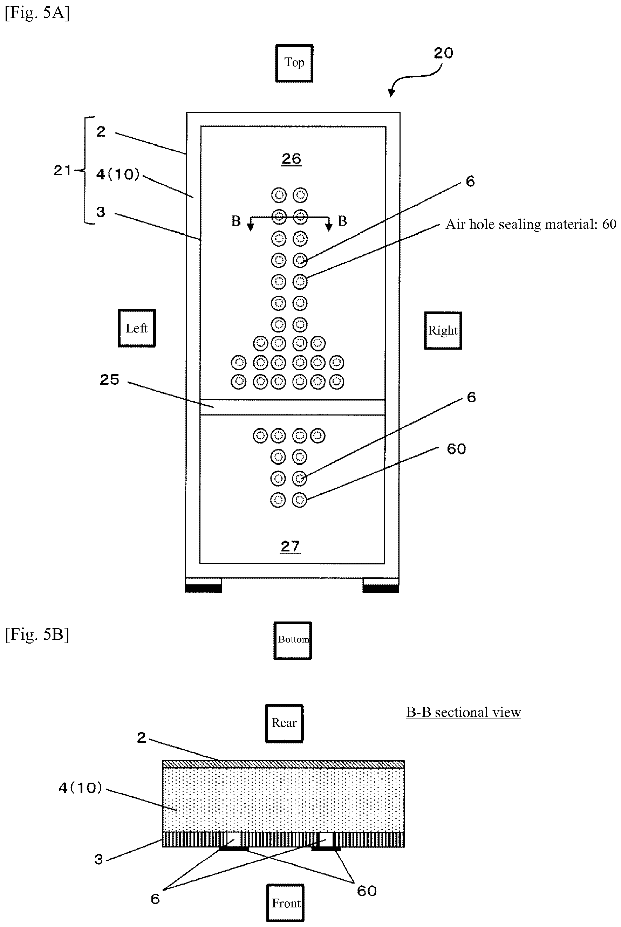

Fig. 5A is a view showing a method 1 for sealing the air hole 6 of the refrigerator 20. Fig. 5B is a local sectional view showing a part of the refrigerator 20 taken along line B-B in Fig. 5A.

As shown in Figs. 5A and 5B, an adhesive such as an epoxy resin is applied individually on a one-to-one basis to the circumferences of air holes 6 at 40 locations in the inner casing 3. A disc-shaped air hole sealing material 60 (sealing material) formed of an air impermeable material such as silicone rubber or isobutylene-isoprene rubber is bonded onto each air hole 6 to seal each air hole 6.

Since air holes 6 are individually covered with the air hole sealing material 60 as described above, the air hole sealing material 60 is prevented from covering regions other than air holes 6 in the inner casing 3. Thus, the area of the air hole sealing material 60 is small, so that costs can be reduced. Even if some of air holes 6 are not sufficiently sealed, this does not affect the sealing of other air holes 6. Accordingly, deterioration of the sealing property can be suppressed.

### [Method 2 for Sealing Air Hole]

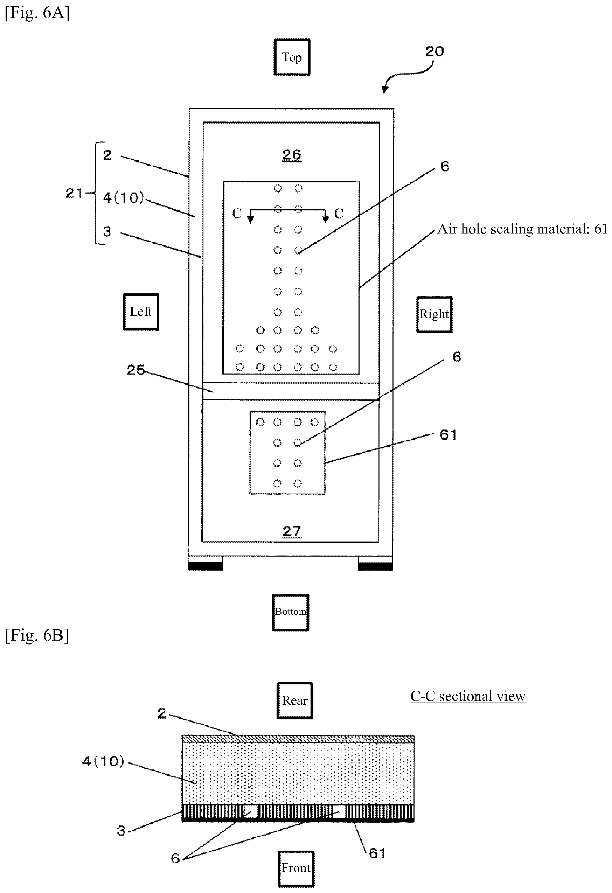

Fig. 6A is a view showing a method 2 for sealing the air hole 6 of the refrigerator 20. Fig. 6B is a local sectional view showing a part of the refrigerator 20 taken along line C-C in Fig. 6A.

As shown in 6A and 6B, an air hole sealing material 61 (sealing material) is bonded collectively to air holes 6 at 30 locations on the refrigerator compartment 26 side in the inner casing 3 to seal these air holes 6. Another air hole sealing material 61 is bonded collectively to air holes 6 at 10 locations on the freezer compartment 27 side in the inner casing 3 to seal these air holes 6. These two air hole sealing materials 61 are each in the form of a sheet, and formed of an air impermeable material such as silicone rubber or isobutylene-isoprene rubber.

By collectively sealing a plurality of air holes 6 with one air hole sealing material 61 as described above, sealing operations can be reduced. Remaining components for the refrigerator 20 can be quickly attached after air holes 6 are sealed.

### [Method 3 for Sealing Air Hole]

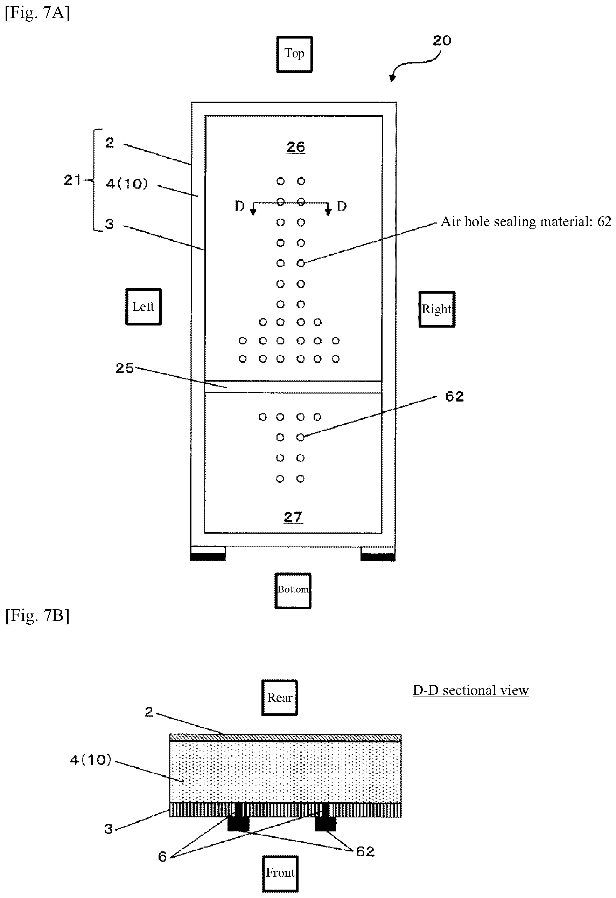

Fig. 7A is a view showing a method 3 for sealing the air hole 6 of the refrigerator 20. Fig. 7B is a local sectional view showing a part of the refrigerator 20 taken along line D-D in Fig. 7A.

As shown in 7A and 7B, an air hole sealing material 62 (sealing material) is mechanically embedded individually on a one-to-one basis in air holes 6 at 40 locations in the inner casing 3 to seal the air holes 6. The air hole sealing material 62 is in the form of a screw (including a bolt), and has a cylinder portion and a head portion. The cylinder portion is almost identical in diameter size and length size to the air hole 6, and is fitted in the air hole 6. The head portion is in the form of a disc, and its diameter size is larger than the size of the air hole 6. Thus, when the cylinder portion of the air hole sealing material 62 is fitted in the air hole 6, the head portion covers a gap between the air hole 6 and the cylinder portion.

Since air holes 6 are individually covered with the air hole sealing material 62 as described above, the air hole sealing material 62 is prevented from covering regions other than air holes 6 in the inner casing 3. Thus, the size of the air hole sealing material 62 is small, so that costs can be reduced. Even if some of air holes 6 are not sufficiently sealed, this does not affect the sealing of other air holes 6. Accordingly, deterioration of the sealing property can be suppressed. Since the air hole sealing material 62 is mechanically embedded in the air hole 6, waiting time for hardening the resin after bonding is not required, and remaining components for the refrigerator 20 can be quickly attached after air holes 6 are sealed.

### [Example 1 for Sealing Urethane Liquid Injection Port]

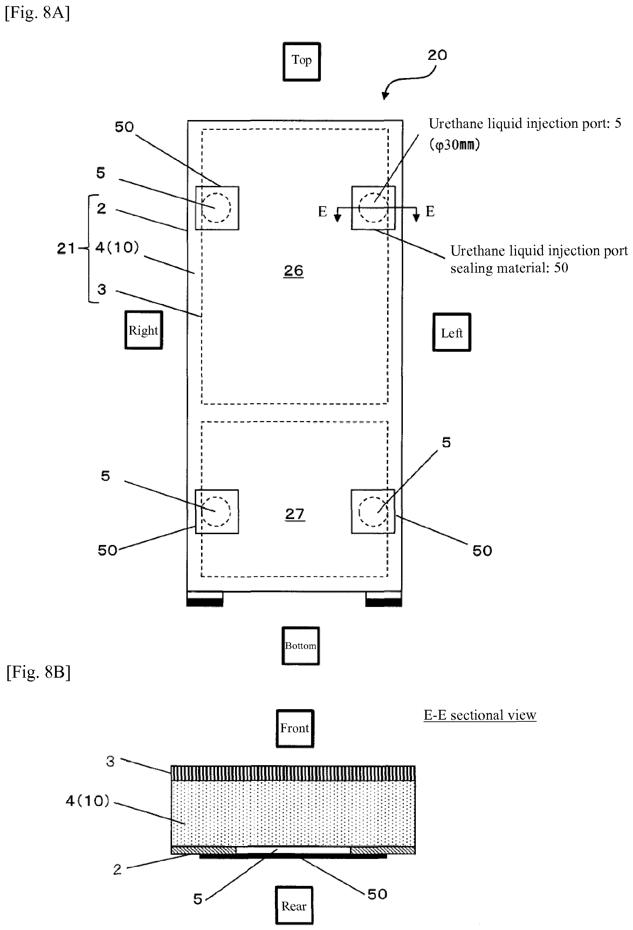

Fig. 8A is a view showing a method 1 for sealing the urethane liquid injection port 5 of the refrigerator 20. Fig. 8B is a local sectional view showing a part of the refrigerator 20 taken along line E-E in Fig. 8A.

Since the diameter size of the urethane liquid injection port 5 is larger than the size of the air hole 6, for example, it is difficult to perform sealing by inserting a screw-shaped sealing material in the urethane liquid injection port 5. Since the interval size between adjacent urethane liquid injection ports 5 is larger than the air hole 6, it is difficult to collectively seal urethane liquid injection ports 5 at four locations. As shown in 8A and 8B, a urethane liquid injection port sealing material 50 (sealing material) is bonded individually on a one-to-one basis to urethane liquid injection ports 5 at four locations using an adhesive or the like. The urethane liquid injection port sealing material 50 is in the form of a sheet, and formed of an air impermeable material such as silicone rubber, isobutylene-isoprene rubber or an iron plate. By sealing the urethane liquid injection ports 5 as described above, the area of the urethane liquid injection port sealing material 50 is kept small, so that costs can be reduced.

### [Example 2 for Sealing Urethane Liquid Injection Port]

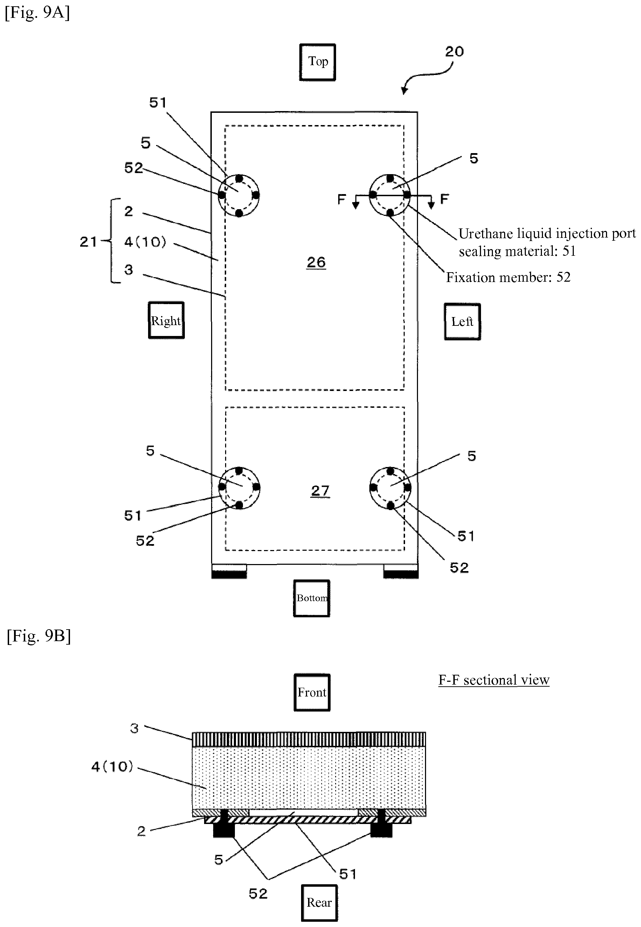

Fig. 9A is a view showing a method 2 for sealing the urethane liquid injection port 5 of the refrigerator 20. Fig. 9B is a local sectional view showing a part of the refrigerator 20 taken along line F-F in Fig. 9A.

As shown in 9A and 9B, urethane liquid injection ports 5 at four locations are covered and sealed with a urethane liquid injection port sealing material 51 (sealing material) individually on a one-to-one basis. The urethane liquid injection port sealing material 51 is in the form of, for example, a disc, and formed of an air impermeable material such as silicone rubber, isobutylene-isoprene rubber or an iron plate. For example, first fixation holes are made at four locations on the outer circumference side of the urethane liquid injection port sealing material 51. Further, in the outer casing 2, for example, second fixation holes are made at four locations on the outer circumference of the urethane liquid injection port 5. Accordingly, the urethane liquid injection port sealing material 51 is disposed on the urethane liquid injection port 5 such that the first fixation hole and the second fixation hole correspond to each other. A fixation member 52 such as a vis is inserted in the first fixation hole and the second fixation hole to fix the urethane liquid injection port sealing material 51 to the outer casing 2. Consequently, the liquid injection port sealing material 51 can cover and seal the urethane liquid injection port 5.

By using the fixation member 52 as described above, the urethane liquid injection port sealing material 51 can be firmly fixed to the outer casing 2 easily and reliably, so that reliability of sealing is improved.

### [Conclusions]

According to the configuration described above, air holes 6 for releasing air are provided on wall bodies 2 and 3, and resultantly fluidity of the urethane liquid and air is secured during injection and foaming of the urethane liquid in the heat-insulating space 10, so that generation of an air reservoir in the heat-insulating space 10 is suppressed. Consequently, degradation of the open-cell urethane foam 4 by moisture contained in air of the air reservoir is prevented, so that deformation and deterioration of heat-insulating properties of the heat-insulating box 21 can be prevented. Moreover, the heat-insulating space 10 is uniformly filled with the open-cell urethane foam 4, and therefore the heat-insulating properties of the heat-insulating box 21 can be improved.

Further, urethane liquid injection ports 5 are sealed with urethane liquid injection port sealing materials 50, 51 and 55, and air holes 6 are sealed with air hole sealing materials 60, 61 and 62. Thus, the heat-insulating space 10 filled with the open-cell urethane foam 4 is airtightly closed, so that air and moisture contained therein are prevented from entering the heat-insulating space 10. Accordingly, degradation of the open-cell urethane foam 4 by moisture is prevented, so that deformation of the external appearance of the heat-insulating box 21 is prevented, and heat-insulating performance of the heat-insulating box 21 is kept high over a long period of time.

When the open-cell urethane foam 4 is molded by integral foaming in the airtightly closed heat-insulating space 10 as in the conventional technique, generation of a skin layer 4d having a high density and having a large number of closed cells cannot be avoided. It is neither disclosed nor suggested in the conventional technique that cells in the skin layer 4d are made to communicate with one another. On the other hand, by using a plurality of polyols of different compositions and a urethane liquid containing the powder 46, cells 47 can be made to communicate with one another throughout the open-cell urethane foam 4 including the skin layer 4d. That is, in the open-cell urethane foam 4, the first through-hole 44 extending through the cell film portion 42 can be formed using a plurality of polyols of different compositions, and the second through-hole 45 extending through the cell skeleton portion 43 can be formed using the powder 46. Particularly, using the powder 46 having a diameter size larger than the thickness size of the cell skeleton portion 43, the second through-hole 45 can be formed not only in the core layer 4c but also in the skin layer 4d having a large number of cell skeleton portions 43. Thus, cells 47 communicate with one another through the through-holes 44 and 45 throughout the open-cell urethane foam 4. Consequently, the open-cell urethane foam 4 has no or almost no closed cells, and therefore deformation of the airtightly closed heat-insulating box 21 and deterioration of the heat-insulating properties of the heat-insulating box 21 by a residual gas released from closed cells can be prevented.

Further, by making the diameter size of the air hole 6 smaller than the size of the urethane liquid injection port 5, generation of an air reservoir can be suppressed while leakage of the urethane liquid is suppressed.

By forming the air hole 6 and the urethane liquid injection port 5 separately in the inner casing 3 and the outer casing 2, respectively, generation of an air reservoir by the air hole 6 can be efficiently prevented.

### Embodiment 2

A heat-insulating box 21 according to Embodiment 2 of the present invention is formed by evacuating a heat-insulating space 10 after filling the heat-insulating space 10 with an open-cell urethane foam 4 shown in Fig. 1A. Consequently, the pressure of the heat-insulating space 10 is lower than atmospheric pressure, so that the heat-insulating space 10 is in a vacuum state. The vacuum state includes a state in which the pressure of the heat-insulating space 10 is lower than atmospheric pressure.

In the heat-insulating box 21 according to Embodiment 2, the urethane liquid injection port 5 in Embodiment 1 is used also as an exhaust hole (gas circulation port) to which a vacuum pump for evacuation is connected. Therefore, the example of a structure of the heat-insulating box 21 shown in Figs. 1A and 1B can be applied to the heat-insulating box 21 according to Embodiment 2.

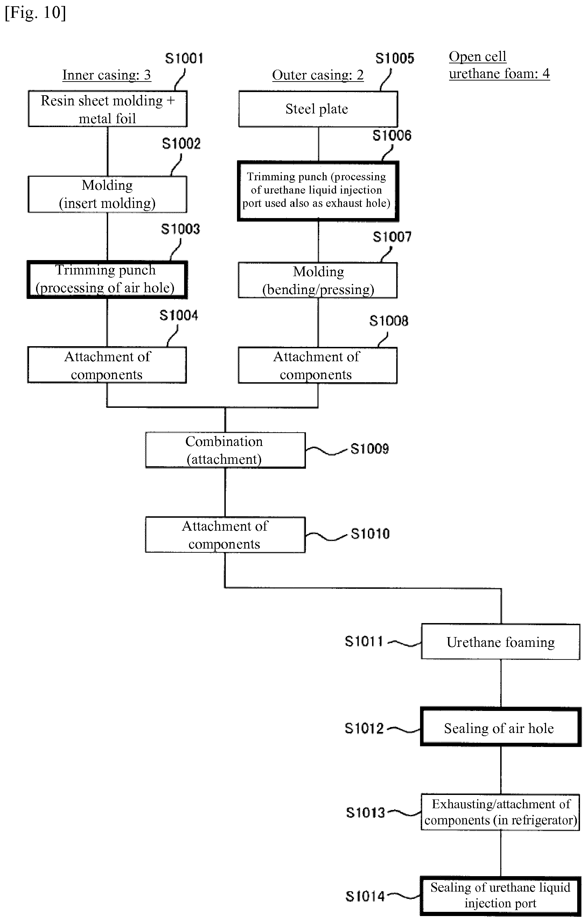

Fig. 10 is a flow chart of construction of a refrigerator 20 including the heat-insulating box 21 according to Embodiment 2. For preparation of the inner casing 3 shown in Fig. 1A, first a hard resin such as an ABS resin and a metal foil are provided as shown in Fig. 10 (step: S1001). Insert molding for integrating the metal foil and the hard resin is performed in the process of injecting the hard resin into a predetermined mold and solidifying the hard resin (step S1002). Consequently, the box-shaped inner casing 3 with desired airtightness is obtained. Next, the back plate of the inner casing 3 is punched by a trimming punch to form air holes 6 at each of predetermined locations where the air hole 6 is to be disposed (step: S1003). Predetermined components for the refrigerator 20, which should be attached before the inner casing 3 and the outer casing 2 are combined, are attached to the inner casing 3 (step: S1004).

When the hard resin is not used, a metallic steel plate may be used for the inner casing 3 similarly to molding of an outer casing 2 described below for maintaining the airtightness of a refrigerator 20.

For preparation of the outer casing 2, first the metallic steel plate is punched by a trimming punch to form a urethane liquid injection port 5 at each of locations where the urethane liquid injection port 5 is to be disposed (steps: S1005 and S1006). The steel plate after punching is subjected to press molding such as bending (step: S1007). Consequently, a desired box shape as the outer casing 2 is obtained. Predetermined components for the refrigerator 20, which should be attached before the inner casing 3 and the outer casing 2 are combined, are attached to the outer casing 2 (step: S1008).

The inner casing 3 and the outer casing 2 independently prepared as described above are combined (attached together) (step: S1009). The specific attachment method is similar to that in Embodiment 1, and therefore descriptions thereof are omitted. Predetermined components for the refrigerator 20, which should be attached before the heat-insulating space 10 is filled with the open-cell urethane foam 4, are attached to wall bodies 2 and 3 (step: S1010).

Next, the open-cell urethane foam 4 is subjected to integral foaming/molding in the heat-insulating space 10 between the outer casing 2 and the inner casing 3 (step: S1011). The integral foaming/molding is as described above with reference to Fig. 4. Consequently, air merged into a urethane liquid reservoir 4b is exhausted from the air hole 6 on the back surface of the inner casing 3 (see Fig. 1A), so that generation of an air reservoir (urethane-unfilled portion) is suppressed in the heat-insulating space 10 of the heat-insulating box 21.

Next, for example, air holes 6 at 40 locations in the inner casing 3 are sealed (step S1012). A vacuum pump is connected to the urethane liquid injection port 5 used also as an exhaust hole, and the heat-insulating space 10 filled with the open-cell urethane foam 4 is evacuated. After the heat-insulating space 10 is hereby decompressed, remaining components for the refrigerator 20 are attached to wall bodies 2 and 3 (step S1013).

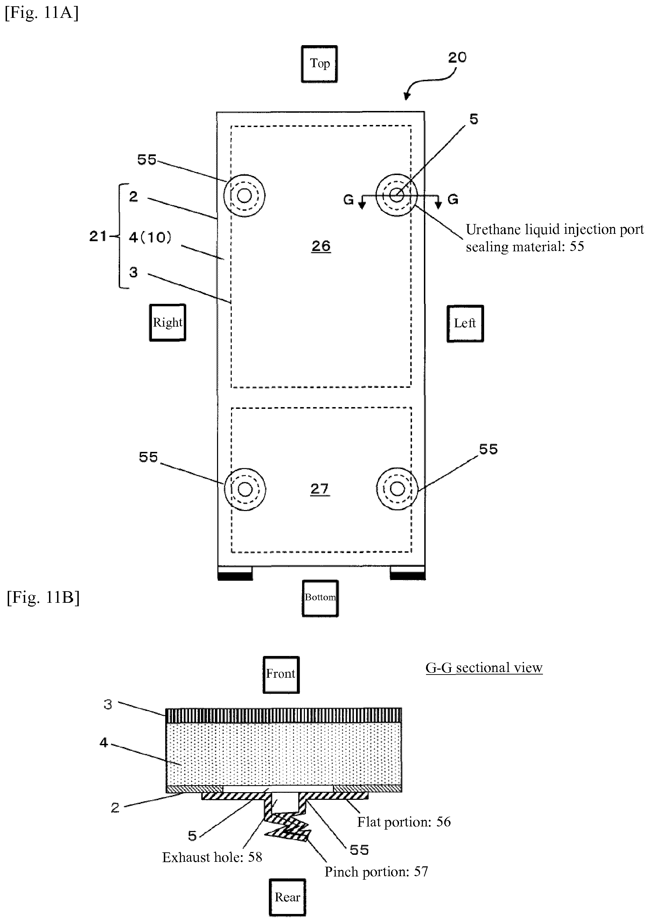

The urethane liquid injection port 5 used also as an exhaust hole is sealed (step S1014). The method for sealing the urethane liquid injection port 5 used also as an exhaust hole is similar to that in Embodiment 1, and urethane injection port sealing materials 50 and 51 can be used. As other sealing methods, sealing methods shown in Figs. 11A and 11B can also be employed. Fig. 11A is a view showing a method for sealing the urethane liquid injection port 5 also used as an exhaust hole. Fig. 11B is a local sectional view showing a part of the refrigerator 20 taken along line G-G in Fig. 11A.

As shown in 11A and 11B, for example, urethane liquid injection ports 5 at four locations are sealed with a urethane liquid injection port sealing material 55 (sealing material) individually on a one-to-one basis. As shown in Fig. 11B, the urethane liquid injection port sealing material 55 is formed of an air impermeable material such as silicone rubber, isobutylene-isoprene rubber or an iron plate, and has a flat portion 56, a pinch portion 57 and an exhaust hole 58. The flat portion 56 is in the form of a circle having a diameter larger than the hole size of the urethane liquid injection port 5 used also as an exhaust hole, and is disposed on the urethane liquid injection port 5. The exhaust hole 58 is disposed at the central part of the flat portion 56, and has a hole size equal to or smaller than the hole size of the urethane liquid injection port 5. The pinch portion 57 is cylindrically erected from the exhaust hole 58, and can be sealed at its tip.

The hole size of the exhaust hole 58 is determined so that shortening of time required for evacuation and ease of pinching can be realized in a well-balanced manner. For example, when the hole size of the exhaust hole 58 is small, time required for evacuation increases, but sealing by the pinch portion 57 becomes easier. On the other hand, when the hole size of the exhaust hole 58 is large, sealing by the pinch portion 57 becomes less easy, but time required for evacuation can be shortened. In this embodiment, a hole size of, for example, 10 mm can be employed. When the hole size of the exhaust hole 58 is small, the exhaust hole 58 is not necessarily sealed by the pinch portion 57, but may be sealed using a sealing material such as, for example, a resin or glass.

According to the configuration described above, the heat-insulating properties of the heat-insulating box 21 with the heat-insulating space 10 filled with the open-cell urethane foam 4 can be kept high by sealing the exhaust hole 58.

Since the urethane liquid injection port 5 is used also as the exhaust hole 58, the exhaust hole 58 can be sealed in parallel to sealing the urethane liquid injection port 5. Consequently, the man-hour for constructing the heat-insulating box 21 and cooling/warming equipment (e.g. refrigerator) including the heat-insulating box 21 can be reduced.

An exhaust hole may be disposed independently of the urethane liquid injection port 5 rather than using the urethane liquid injection port 5 also as an exhaust hole. The method for sealing the urethane liquid injection port 5 in Embodiment 1 can be applied as the method for sealing the exhaust hole in this case.

### Embodiment 3

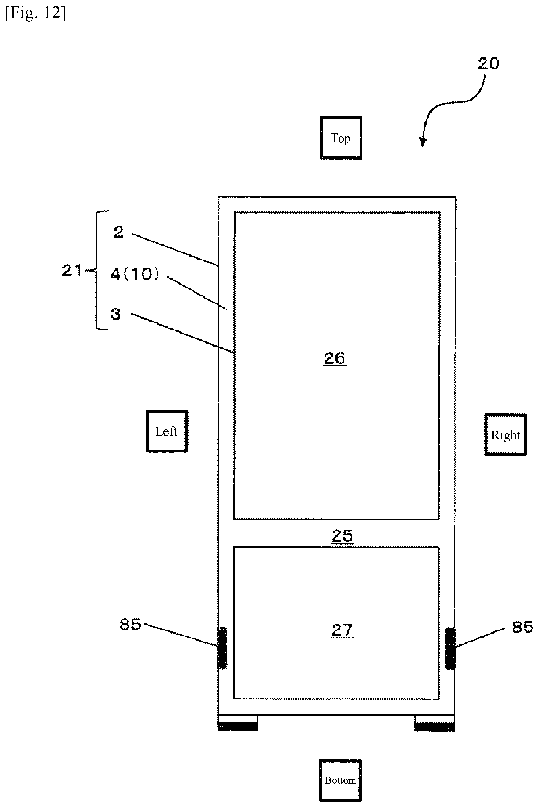

In a heat-insulating box 21 according to Embodiment 3 of the present invention, a gas adsorbing device 85 (adsorbent) that adsorbs a carbon dioxide gas etc. in an open-cell urethane foam 4 is disposed in a heat-insulating space 10 as shown in Fig. 12. Fig. 12 is a front view of a refrigerator 20 including a heat-insulating box 21 according to Embodiment 3 of the present invention.

One gas adsorbing device 85 is disposed in the heat-insulating space 10 on each of both side surfaces of a freezer compartment 27 on the lower left side and the lower right side of the heat-insulating box 21 shown in Fig. 12. Consequently, since the cooling retention temperature of the freezer compartment 27 is lower than that of a refrigerator compartment 26, a gas in the heat-insulating space 10 moves into the heat-insulating space on the circumference of the freezer compartment 27, so that the gas can be efficiently adsorbed by the gas adsorbing device 85. Of course, the disposition and number of gas adsorbing devices 85 can be changed according to a size and form of the refrigerator 20, and the number and disposition thereof is not limited to the two locations described above.

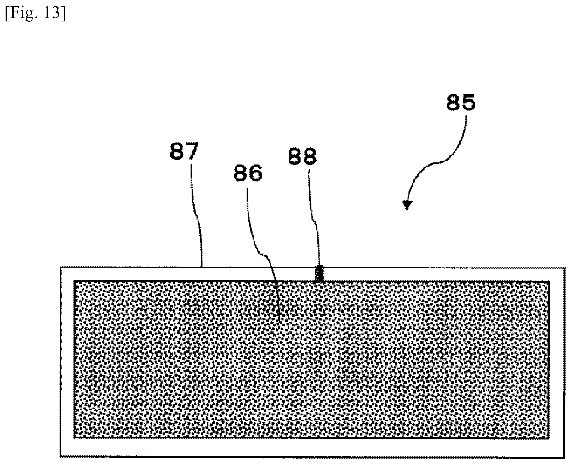

Fig. 13 is one example of a sectional view of the gas adsorbing device 85. As shown in Fig. 13, the gas adsorbing device 85 includes a gas adsorption substance 86, and a storage container 87 having an opening 88 for storing the gas adsorbing material 86.

The gas adsorption substance 86 plays the role of adsorbing gases such as water vapor, air and a carbon dioxide gas which remain in the closed space or enter the closed space. Examples of the gas adsorbing material 86 that can be used include, but are not particularly limited to, chemical adsorption substances such calcium oxide and magnesium oxide, physical adsorption substances such as zeolite, and mixtures thereof. A copper-ion-exchanged ZSM-5 type zeolite having both chemical adsorptivity and physical adsorptivity can also be used as the gas adsorbing material 86. The copper-ion-exchanged ZSM-5 type zeolite has a particularly high nitrogen adsorbing capability at a pressure lower than atmospheric pressure, and therefore can strongly adsorb nitrogen at the time of ingress of air.

Further, an adsorbent that adsorbs a carbon dioxide gas, for example a ZSM-5 zeolite ion-exchanged with barium and/or strontium, can also be used as the gas adsorbing material 86. The gas adsorbing material 86 that adsorbs a carbon dioxide gas is desired to be a material obtained by ion-exchanging a ZSM-5 type zeolite as a main agent with barium and/or strontium. The carbon dioxide gas adsorption amount of a Na-A type zeolite, which is a part of the conventional technique, is 3 cc/g at a pressure of 10 Pa. On the other hand, the carbon dioxide gas adsorption amount of the barium-ion-exchanged ZSM-5 type zeolite is 12 cc/g at a pressure of 10 Pa, so that a large volume of lean carbon dioxide gas can be adsorbed and removed. Consequently, the vacuum degree of the heat-insulating space 10 in which the gas adsorbing device 85 is disposed can be kept high.

The zeolite ion-exchanged with barium and/or strontium as described above is a carbon dioxide adsorption material that includes a ZSM-5 type zeolite containing barium (Ba) and/or strontium (Sr), with the ZSM-5 type zeolite including a Ba-O-Ba species and/or a Sr-O-Sr species. Accordingly, a strong interaction with carbon dioxide is produced, and therefore even under a condition of lean carbon dioxide with the equilibrium pressure being lower than atmospheric pressure, carbon dioxide is strongly adsorbed, so that a large volume of carbon dioxide can be adsorbed. One example of methods for checking whether the Ba-O-Ba species is contained or not is a method in which FT-IR measurement is performed using adsorbed acetylene as a probe.

The storage container 87 is hardly permeable to gases such as air and water vapor, and plays the role of preventing the gas adsorbing material 86 from coming into contact with a gas before the gas adsorbing device 85 is used. The material and shape of the storage container 87 are not particularly specified. For the material of the storage container 87, a metal material such as, for example, aluminum, copper, iron or stainless steel is used. The storage container 87 is molded in a shape of, for example, a narrow and long and flat cylinder.

The example of construction of the refrigerator 20 according to Embodiment 3 is almost the same as the example of construction of the refrigerator 20 shown in the flow chart of Fig. 10. A plurality of gas adsorbing devices 85 are dispersively disposed in the heat-insulating space 10 in wall bodies 2 and 3 at the time of attaching components to wall bodies 2 and 3 by the treatment in step S1010 shown in Fig. 10. A urethane liquid of an open-cell urethane foam 4 is injected into the heat-insulating space 10 from the urethane liquid injection port 5 used also as an exhaust hole. When the open-cell urethane foam 4 is formed in the heat-insulating space 10, then air holes 6 are sealed with air hole sealing materials 60, 61 and 65 etc. The heat-insulating space 10 is then evacuated from a urethane liquid injection port 5 used also as an exhaust hole to seal the urethane liquid injection port 5 used also as an exhaust hole with urethane liquid injection port seaming materials 50, 51 and 55 etc.

According to this embodiment, the time for bringing the heat-insulating space 10 into vacuum can be shortened. That is, at the time of evacuation, air can be sufficiently exhausted by a vacuum pump at a pressure of viscous flow (low vacuum), but in the high vacuum degree range of molecular flow (high vacuum), the exhaust resistance increases, and therefore it takes much time to exhaust air by a vacuum pump. Thus, gas adsorbing devices 85 are dispersively disposed in the heat-insulating space 10 beforehand to cause the gas adsorbing devices 85 to exhibit a gas adsorption function. Consequently, the exhaust distance of the open-cell urethane foam 4 is reduced, so that the heat-insulating space 10 can be efficiently decompressed (evacuated).

Further, the gas adsorbing device 85 adsorbs a very small amount of gas remaining after the heat-insulating space 10 of the heat-insulating box 21 is evacuated, and therefore the heat-insulating space 10 can be kept at a desired vacuum degree.

A very small amount of gas remaining in the heat-insulating space 10 includes, in addition to air components, a carbon dioxide gas produced by a reaction of water with an isocyanate. Thus, in addition to gas adsorbing devices 85 for adsorbing air, gas adsorbing devices 85 for adsorbing a carbon dioxide gas may be dispersively disposed in the heat-insulating space 10.

Gas adsorbing devices 86 may be dispersively disposed in the heat-insulating space 10 of the heat-insulating box 21 and the heat-insulating wall according to Embodiment 1 in which evacuation is not performed. When the gas adsorption function of the gas adsorbing device is exhibited, degradation of the open-cell urethane foam 4 in the heat-insulating space 10 is further easily prevented.

### Embodiment 4

A heat-insulating box 21 according to Embodiment 4 of the present invention is formed by molding an open-cell urethane foam 4 by integral foaming with one of wall bodies as a skin material, and mounting the other wall body on the resulting molded body. While this embodiment is described with one of wall bodies being an inner casing 3 and the other wall body being an outer casing 2, a case where they are interchanged does not lead to a difference, and therefore descriptions of the case are omitted.

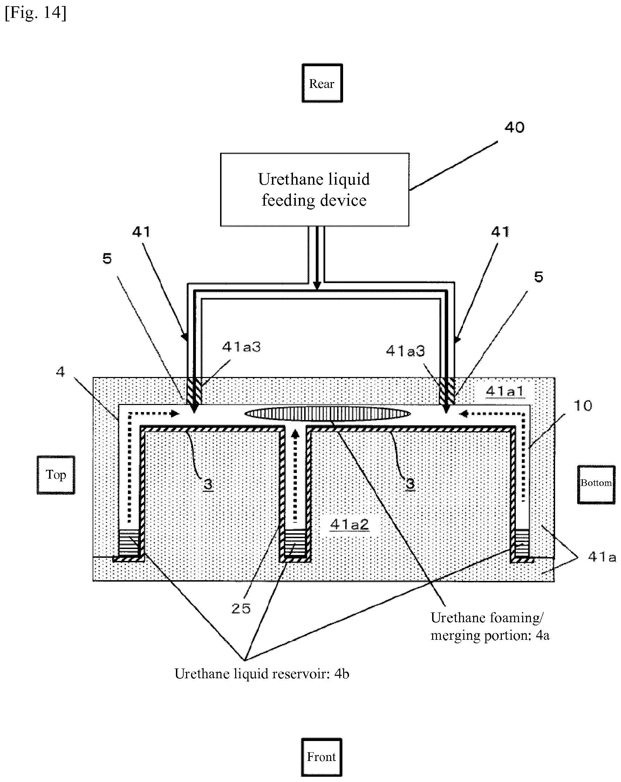

Fig. 14 is a sectional view for explaining integral foaming/molding of the heat-insulating box 21. A urethane foaming tool 41a shown in Fig. 14 is similar to the urethane foaming tool 41a shown in Fig. 4 except for a first tool 41al, and descriptions of similar parts are omitted. The urethane foaming tool 41a described in this embodiment supports a wall body 3 at the time of integral foaming/molding, and functions as a mold for molding the open-cell urethane foam 4. That is, a second tool 41a2 supports the inner casing 3 with the inner casing 3 fitted in a depression of the tool. On the other hand, the outer casing 2 is not fitted in a depression provided in the first tool 41a1, and the depression has a shape conforming to the front surface of the outer casing 2, and functions as a mold on the rear surface side of the heat-insulating box 21. Air thrust aside from a heat-insulating space 10 at the time of injecting and foaming an urethane liquid may be discharged from, for example, a gap between the first tool 41a1 and the second tool 41a2. In this case, an air hole 6 of the inner casing 3 and a perforation of the second tool 41a2, which is disposed in correspondence with the air hole 6, are not required to be provided.

When the urethane foaming tool 41a is used to perform integral foaming/molding, first the inner casing 3 is fitted in the second tool 41a2 as shown in Fig. 14, and the first tool 41a1 is disposed on the second tool 41a2. Consequently, an internal space surrounded by the front surface of the depression of the first tool 41a1 and the rear surface of the inner casing 3 is formed. The internal space has a shape identical to that of the heat-insulating space 10 surrounded by the front surface of the outer casing 2 and the rear surface of the inner casing 3. Accordingly, a tip of a liquid feeding hose 41 of a urethane liquid feeding device 40 is connected to a urethane liquid injection port 5 to inject a urethane liquid to the urethane liquid injection port 5 from the urethane liquid feeding device 40 through the liquid feeding hose 41. Consequently, the urethane liquid is foamed integrally with the inner casing 3 to form a molded body with the inner casing 3 as a skin material of the open-cell urethane foam 4. The open-cell urethane foam 4 has a shape corresponding to the heat-insulating space 10. The front surface of the open-cell urethane foam 4 is covered with the inner casing 3, while the rear surface thereof is exposed. Thus, the molded body is taken out from the urethane foaming tool 41a, and the rear surface of the open-cell urethane foam 4 is covered with the outer casing 2. Consequently, the whole of the open-cell urethane foam 4 is covered with wall bodies 2 and 3 to produce the heat-insulating box 21 with the wall bodies and the open-cell urethane foam 4 molded integrally.

Similar to Embodiment 2, the heat-insulating space 10 surrounded by the inner casing 3 and the outer casing 2 may be brought into a vacuum state after the open-cell urethane foam 4 foamed integrally with the inner casing 3 is covered with the outer casing 2. In this case, since an exhaust hole is provided in the inner casing 3 and/or the outer casing 2, air is exhausted from the exhaust hole to bring the heat-insulating space 10 into a vacuum state, followed by sealing the exhaust hole with an exhaust hole sealing material.

Further, similar to Embodiment 3, a gas adsorbing device 85 may be disposed in the heat-insulating space 10 surrounded by the inner casing 3 and the outer casing 2 after the open-cell urethane foam 4 foamed integrally with the inner casing 3 is covered with the outer casing 2. Alternatively, the open-cell urethane foam 4 may be foamed integrally with the inner casing 3 and the air adsorbing device 85 to be molded, followed by mounting the outer casing 2 on the resulting molded body.

In the molded body obtained by integral foaming of the inner casing 3 and the open-cell urethane foam 4, the rear surface of the open-cell urethane foam 4 is exposed. Thus, a skin layer at an area corresponding to the exhaust hole or the urethane liquid injection port 5 used also as an exhaust hole on the rear surface of the open-cell urethane foam 4 can be removed. Consequently, an area where a large number of cells 47 and through-holes 44 and 45 are present in the open-cell urethane foam 4 is exposed. Therefore, when a vacuum pump is connected to this area, air in the open-cell urethane foam 4 can be smoothly discharged by passing through cells 47 and through-holes 44 and 45.

Further, the inner casing 3 may be provided with the air hole 6. In this case, a perforation of the second tool 41a2, which is disposed in correspondence with the air hole 6, is provided. Accordingly, the open-cell urethane foam 4 foamed integrally with the inner casing 3 is covered with the outer casing 2, followed by sealing the air hole 6 with an air hole sealing material.

Alternatively, the outer casing 2 and the open-cell urethane foam 4 may be integrally foamed to be molded, followed by covering the resulting molded body with the inner casing 3. In this case, the urethane liquid injection port 5 is provided in the outer casing 2, and a perforation 41a3 is provided at a position in the first tool 41a1 which corresponds to the urethane liquid injection port 5. In this case, the open-cell urethane foam 4 foamed integrally with the inner casing 2 is covered with the inner casing 3, followed by sealing the urethane liquid injection port 5 with a urethane liquid injection port sealing material to form the heat-insulating box 21.

According to the embodiment described above, the inner casing 3 and the open-cell urethane foam 4 are integrally foamed to be molded, followed by mounting the other box, i.e. the outer casing 2 on the resulting molded body to produce the heat-insulating box 21, so that deformation of the heat-insulating box 21 can be reduced. Specifically, when the outer casing 2 is formed of a metal and the inner casing 3 is formed of a resin, the thermal expansion coefficient of the outer casing 2 is different from the thermal expansion coefficient of each of the inner casing 3 and the open-cell urethane foam 4. Therefore, due to heat generated when the urethane liquid undergoes a polymerization reaction, a change in size of the inner casing 3 and the open-cell urethane foam 4 is greater than a change in size of the outer casing 2. Accordingly, the heat-insulating box 21 formed by combining the outer casing 2 and the inner casing 3, and then filling the heat-insulating space 10 therebetween with the open-cell urethane foam 4 may be deformed. Thus, the outer casing 2 is excluded, and the inner casing 3 and the urethane liquid of the open-cell urethane foam 4 are integrally foamed to be molded. Consequently, since the thermal expansion coefficients of the inner casing 3 and the open-cell urethane foam 4 are close to each other, they are thermally expanded to the same degree, and then cooled and contracted, so that the resulting molded body is hard to be deformed. When the outer casing 2 having a thermal expansion coefficient different from that of the open-cell urethane foam 4 is mounted on the molded body to form the heat-insulating box 21, dimensional deformation of the heat-insulating box 21 can be prevented.

### Other Embodiments

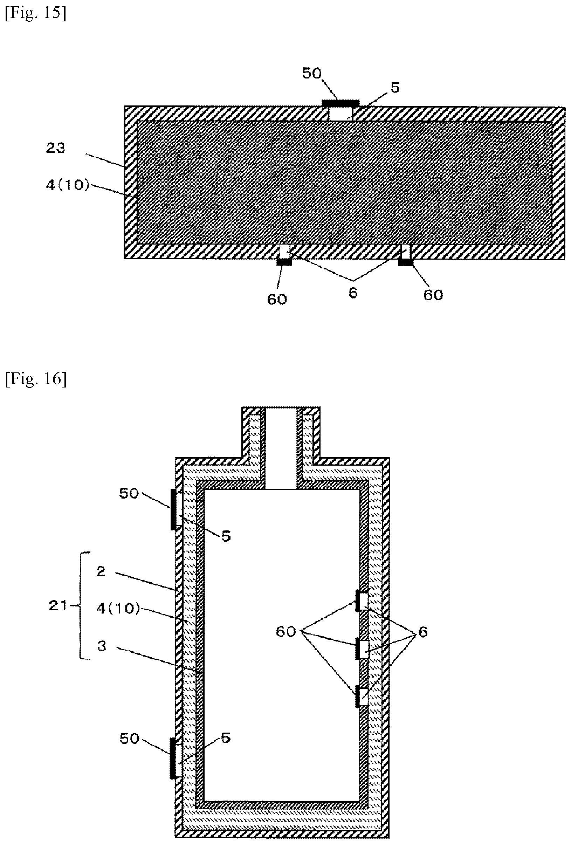

In all the embodiments described above, the heat-insulating box 21 that is a box-shaped container which has an internal space and is opened at the front has been described as one example of the heat-insulating wall. However, the shape etc. of the heat-insulating wall is not limited thereto. That is, the heat-insulating wall should include a wall body which functions as a skin material, and an open-cell resin body of thermosetting resin which is formed integrally with at least a part of the wall body and which functions as a heat-insulating material. For example, as shown in Fig. 15, a heat-insulating space 10 of a substantially flat plate-shaped wall body 23 may be filled with an open-cell urethane foam 4 to form a substantially flat plate-shaped heat-insulating wall. The heat-insulating wall is used for, for example, a door of a refrigerator 20 and a door of a house. In this case, the wall body 23 includes one hollow container, and its internal space is used as a heat-insulating space 10.

In all the embodiments described above, the heat-insulating box 21 is used for a flame of the refrigerator 20, but the use of the heat-insulating box 21 is not limited thereto. For example, the heat-insulating box 21 can be used for a pot shown in Fig. 16, a housing of a portable cooling box, a housing of a thermostatic bath, a housing of a hot water storage tank, a cooler box and the like. In the heat-insulating box 21 in Fig. 16, an outer casing 2 and an inner casing 3 each have a bottomed cylindrical shape, and the inner casing 3 is stored in the outer casing 2. The heat-insulating space 10 between the outer casing 2 and the inner casing 3 is filled with the open-cell urethane foam 4 by integral foaming. A urethane injection port 5 extending through the outer casing 2 is sealed with a urethane liquid injection port sealing material 50, and an air hole 6 extending through the inner casing 3 is sealed with an air hole sealing material 60.

In all the embodiments described above, the open-cell resin body is the open-cell urethane foam 4, and a thermosetting urethane resin is used as a resin that forms the open-cell resin body. Not according to the invention, the open-cell resin body and the constituent resin thereof are not limited to the open-cell urethane foam and a thermosetting urethane resin as long as the constituent resin is a thermosetting resin. For example, the open-cell resin body may be an open-cell phenol foam, and a thermosetting phenol resin may be used as a constituent resin thereof. Raw materials of the phenol resin include phenol resin components (e.g. phenol and formaldehyde), a foaming agent and a powder. This powder causes a second through-hole to be formed in a cell skeleton portion of the phenol resin.

In all the embodiments described above, a plurality of polyols having different compositions are used, and by means of distortion resulting therefrom, the first through-hole 44 is formed in the cell film portion 42. Alternatively, not according to the invention, for example a foam breaker (e.g. calcium stearate) for breaking the cell film portion 42 may be blended in the urethane liquid.

All the embodiments may be combined as long as they do not exclude one another.

From the foregoing descriptions, many modifications and other embodiments will be apparent to a person skilled in the art. Therefore, the foregoing descriptions should be construed as illustrative only, and have been provided for the purpose of teaching the best mode for carrying out the invention to a person skilled in the art. Details of the structure and/or function of the present invention may be substantially changed without departing from the scope defined by the appended claims.

### Industrial Applicability

The heat-insulating box of the present invention is economized in energy by improving heat-insulating performance while increasing the internal volume, and can be used in applications such as those of refrigerators and vending machines, hot-water supply containers, heat-insulating materials for buildings, heat-insulating materials for automobiles and cooling/warming boxes.

### Reference Signs List

- 2: outer casing (wall body)
- 3: inner casing (wall body)
- 4: open-cell urethane foam
- 4a: urethane foaming/merging portion
- 4b: urethane liquid reservoir
- 4c: core layer
- 4d: skin layer
- 5: urethane liquid injection port
- 6: air hole
- 10: heat-insulating space
- 20: refrigerator
- 21: heat-insulating box
- 23: wall body
- 25: partition plate
- 26: refrigerator compartment
- 27: freezer compartment
- 40: urethane liquid feeding device
- 41: liquid feeding hose
- 41a: urethane foaming tool
- 42: cell film portion
- 43: cell skeleton portion
- 44: first through-hole
- 45: second through-hole
- 46: fine powder
- 47: cell
- 50, 51, 55: urethane liquid injection port sealing material
- 52: fixation member
- 56: flat portion
- 57: pinch portion
- 58: exhaust hole
- 60, 61, 62: air hole sealing material
- 85: gas adsorbing device
- 86: gas adsorbing material
- 87: storage container
- 88: opening

## Claims

1. A heat-insulating wall comprising:
a wall body (23) whose hollow portion is a heat-insulating space (10);
a gas circulation port which is disposed on the wall body (23) and through which the heat-insulating space (10) communicates with the outside;
an open-cell urethane foam (4) of a thermosetting urethane resin with which the heat-insulating space (10) is filled by integral foaming; and
a sealing material for sealing the gas circulation port,
wherein the open-cell urethane foam (4) comprises: a core layer (4c); and a skin layer (4d) formed in the vicinity of an interface with the wall body (23) and surrounding the core layer (4c),
each of the core layer (4c) and the skin layer (4d) comprises:
a plurality of cells (47);
a cell film portion (42) which is formed at a location where the cells (47) are adjacent to one another;
a cell skeleton portion (43) which is formed at a location where the cells (47) are adjacent to one another and which is formed in such a manner that a distance between the adjacent cells is greater than a thickness of the cell film portion (42);
a first through-hole (44) formed so as to extend through the cell film portion (42); and
a second through-hole (45) formed so as to extend through the cell skeleton portion (43),
the skin layer (4d) contains a larger number of the cell skeleton portions (43) than the core layer (4c),
the plurality of cells (47) communicate with one another through the first through-hole (44) and the second through-hole (45), and
each of the core layer (4c) and the skin layer (4d) further comprises an incompatible powder (46), having a diameter size larger than the thickness of the cell skeleton portion (43), the second through-hole (45) is formed at an interface between the thermosetting urethane resin and the incompatible powder (46), not adhered to the thermosetting urethane resin.

2. A heat-insulating box (21) comprising one or more of the heat-insulating walls according to claim 1, wherein the wall body (23) comprises an outer casing (2) and an inner casing (3) stored in the outer casing (2).

3. The heat-insulating box (21) according to claim 2, wherein the gas circulation port comprises:
an air hole (6) for releasing air from the heat-insulating space (10) in the process of filling the heat-insulating space (10) with the open-cell urethane foam (4); and
a urethane liquid injection port (5) for injecting the raw material of the open-cell urethane foam (4) into the heat-insulating space (10), and
the sealing material comprises:
an air hole sealing material (60, 61, 62) for sealing the air hole (6); and
a urethane liquid injection port sealing material (50, 51, 55) for sealing the urethane liquid injection port (5).

4. The heat-insulating box (21) according to claim 3, wherein the hole size of the air hole (6) is smaller than the hole size of the urethane liquid injection port (5).

5. The heat-insulating box (21) according to claim 3 or 4, wherein the air hole (6) is provided in the inner casing (3), and
the urethane liquid injection port (5) is provided in the outer casing (2).

6. The heat-insulating box (21) according to any one of claims 3 to 5, wherein the gas circulation port further comprises an exhaust hole (58) for evacuating the heat-insulating space (10), and
the sealing material further comprises an exhaust hole sealing material for sealing the exhaust hole (58).

7. The heat-insulating box (21) according to claim 6, wherein the urethane liquid injection port (5) is used also as the exhaust hole (58).

8. The heat-insulating box according to any one of claims 2 to 7, further comprising a gas adsorbing device (85) disposed in the heat-insulating space (10).

9. The heat-insulating box according to claim 8, wherein the gas adsorbing device (85) comprises an adsorbent that adsorbs a carbon dioxide gas, and
the adsorbent comprises ZSM-5 zeolite ion-exchanged with at least one of barium and strontium.

10. A method for producing a heat-insulating box (21) comprising:
forming a heat-insulating space (10) using a wall body (23); and
injecting a raw material of an open-cell urethane foam (4) into the heat-insulating space (10), wherein
the open-cell urethane foam (4) with which the heat-insulating space (10) is filled by integral foaming and molding of the raw material and the wall body (23) comprises:
a plurality of cells (47);
a cell film portion (42) which is formed at a location where the cells (47) are adjacent to one another;
a cell skeleton portion (43) which is formed at a location where the cells (47) are adjacent to one another and which is formed in such a manner that a distance between the adjacent cells is greater than a thickness of the cell film portion (42);
a first through-hole (44) formed so as to extend through the cell film portion (42); and
a second through-hole (45) formed so as to extend through the cell skeleton portion (43),
the plurality of cells (47) communicate with one another through the first through-hole (44) and the second through-hole (45), and
the raw material comprises:
a plurality of polyol mixtures of different compositions for forming the first through-hole (44);
a polyisocyanate which undergoes a polymerization reaction with the polyol mixture to generate a thermosetting urethane resin that forms the cell film portion (42) and the cell skeleton portion (43);
a foaming agent for forming the cells (47); and
a powder (46) for forming the second through-hole (45), the powder (46) being incompatible with the thermosetting urethane resin.

11. The method for producing a heat-insulating box (21) according to claim 10, the method further comprising sealing with a sealing material the gas circulation port which is disposed on the wall body (23) and through which the heat-insulating space (10) communicates with the outside.

12. The method for producing a heat-insulating box (21) according to claim 11, wherein the gas circulation port comprises:
an air hole (6) for releasing air from the heat-insulating space (10) in the process of filling the heat-insulating space (10) with the open-cell urethane foam (4); and
a urethane liquid injection port (5) for injecting the raw material,
the sealing material comprises:
an air hole sealing material (60, 61, 62) for sealing the air hole (6); and
a urethane liquid injection port sealing material (50, 51, 55) for sealing the urethane liquid injection port (5), and
sealing the gas circulation port with the sealing material comprises:
sealing the air hole (6) with the air hole sealing material (60, 61, 62) after injecting the raw material from the urethane liquid injection port (5) into the heat-insulating space (10); and
sealing the urethane liquid injection port (5) with the urethane liquid injection port sealing material (50, 51, 55) after sealing the air hole (6).

13. The method for producing a heat-insulating box (21) according to claim 12, wherein the gas circulation port further comprises an exhaust hole (58) for evacuating the heat-insulating space (10) filled with the open-cell urethane foam (4),
the sealing material further comprises an exhaust hole sealing material for sealing the exhaust hole (58),
the method further comprises evacuating the heat-insulating space (10) through the exhaust hole (58) after sealing the air hole (6), and
sealing the gas circulation port with the sealing material further comprises sealing the exhaust hole (58) with the exhaust hole sealing material after performing the evacuation.

14. The method for producing a heat-insulating box (21) according to any one of claims 10 to 13, the method further comprising disposing a gas adsorbing device (85) in the heat-insulating space (10) before injecting the raw material.

## Patentansprüche

1. Wärmeisolierende Wand, umfassend:
einen Wandkörper (23), dessen hohler Bereich ein wärmeisolierender Raum (10) ist;
eine Gaszirkulationsöffnung, die am Wandkörper (23) angeordnet ist und durch die der wärmeisolierende Raum (10) mit dem Äußeren in Verbindung steht;
einen offenporigen Urethanschaum (4) aus einem wärmeaushärtbaren Urethanharz, mit dem der wärmeisolierende Raum (10) durch integrales Ausschäumen gefüllt ist; und
ein Dichtungsmaterial zum Verschließen der Gaszirkulationsöffnung,
wobei der offenporige Urethanschaum (4) umfasst: eine Kernschicht (4c); und eine Hautschicht (4d), die in der Nähe einer Grenzfläche zu dem Wandkörper (23) ausgebildet ist und die Kernschicht (4c) umgibt,
wobei die Kernschicht (4c) und die Hautschicht (4d) jeweils umfassen:
eine Vielzahl von Poren (47);
einen Porenfilmabschnitt (42), der an einer Stelle ausgebildet ist, an der die Poren (47) zueinander benachbart sind;
einen Porenskelettabschnitt (43), der an einer Stelle ausgebildet ist, an der die Poren (47) zueinander benachbart sind, und der so ausgebildet ist, dass ein Abstand zwischen den benachbarten Poren größer ist als eine Dicke des Porenfilmabschnitts (42);
ein erstes Durchgangsloch (44), das so ausgebildet ist, dass es sich durch den Porenfilmabschnitt (42) erstreckt; und
ein zweites Durchgangsloch (45), das so ausgebildet ist, dass es sich durch den Porenskelettabschnitt (43) erstreckt,
wobei die Hautschicht (4d) eine größere Anzahl an Porenskelettabschnitten (43) enthält als die Kernschicht (4c),
die Vielzahl von Poren (47) über das erste Durchgangsloch (44) und das zweite Durchgangsloch (45) miteinander in Verbindung stehen, und
die Kernschicht (4c) und die Hautschicht (4d) ferner jeweils ein inkompatibles Pulver (46) mit einem Durchmessermaß größer als die Dicke des Porenskelettabschnitts (43) umfassen, wobei das zweite Durchgangsloch (45) an einer Grenzfläche zwischen dem wärmeaushärtbaren Urethanharz und dem inkompatiblen Pulver (46) ausgebildet ist, das nicht an dem wärmeaushärtbaren Urethanharz haftet.

2. Wärmeisolierender Kasten (21), der eine oder mehrere der wärmeisolierenden Wände nach Anspruch 1 umfasst, wobei der Wandkörper (23) ein Außengehäuse (2) und ein Innengehäuse (3) umfasst, das in dem Außengehäuse (2) gelagert ist.

3. Wärmeisolierender Kasten (21) nach Anspruch 2, wobei die Gaszirkulationsöffnung umfasst:
ein Luftloch (6) zum Ablassen von Luft aus dem wärmeisolierenden Raum (10) während des Prozesses des Füllens des wärmeisolierenden Raums (10) mit dem offenporigen Urethanschaum (4); und
eine Urethanflüssigkeit-Einspritzöffnung (5) zum Einspritzen des Rohmaterials des offenporigen Urethanschaums (4) in den wärmeisolierenden Raum (10),
und wobei das Dichtungsmaterial umfasst:
ein Luftloch-Dichtungsmaterial (60, 61, 62) zum Verschließen des Luftlochs (6); und
ein Urethanflüssigkeit-Einspritzöffnung-Dichtungsmaterial (50, 51, 55) zum Verschließen der Urethanflüssigkeit-Einspritzöffnung (5).

4. Wärmeisolierender Kasten (21) nach Anspruch 3, wobei die Lochgröße des Luftlochs (6) kleiner ist als die Lochgröße der Urethanflüssigkeit-Einspritzöffnung (5).

5. Wärmeisolierender Kasten (21) nach Anspruch 3 oder 4, wobei das Luftloch (6) im Innengehäuse (3) vorgesehen ist, und
die Urethanflüssigkeit-Einspritzöffnung (5) im Außengehäuse (2) vorgesehen ist.

6. Wärmeisolierender Kasten (21) nach einem der Ansprüche 3 bis 5, wobei die Gaszirkulationsöffnung ferner ein Auslassloch (58) zum Auspumpen des wärmeisolierenden Raums (10) umfasst, und
das Dichtungsmaterial ferner ein Auslassloch-Dichtungsmaterial zum Verschließen des Auslasslochs (58) umfasst.

7. Wärmeisolierender Kasten (21) nach Anspruch 6, wobei die Urethanflüssigkeit-Einspritzöffnung (5) auch als Auslassloch (58) verwendet wird.

8. Wärmeisolierender Kasten nach einem der Ansprüche 2 bis 7, ferner eine Gasadsorptionsvorrichtung (85) umfassend, die im wärmeisolierenden Raum (10) angeordnet ist.

9. Wärmeisolierender Kasten nach Anspruch 8, wobei die Gasadsorptionsvorrichtung (85) ein Adsorptionsmittel enthält, das ein Kohlendioxidgas adsorbiert, und
das Adsorptionsmittel Zeolith ZSM-5 enthält, der mit wenigstens Barium und/oder Strontium ionenausgetauscht ist.

10. Verfahren zum Herstellen eines wärmeisolierenden Kastens (21), umfassend:
Ausbilden eines wärmeisolierenden Raums (10) unter Verwendung eines Wandkörpers (23); und
Einspritzen eines Rohmaterials eines offenporigen Urethanschaums (4) in den wärmeisolierenden Raum (10),
wobei der offenporige Urethanschaum (4), mit dem der wärmeisolierende Raum (10) durch integrales Ausschäumen und Vergießen des Rohmaterials und des Wandkörpers (23) gefüllt wird, umfasst:
eine Vielzahl von Poren (47);
einen Porenfilmabschnitt (42), der an einer Stelle ausgebildet wird, an der die Poren (47) zueinander benachbart sind;
einen Porenskelettabschnitt (43), der an einer Stelle ausgebildet wird, an der die Poren (47) zueinander benachbart sind, und der so ausgebildet wird, dass ein Abstand zwischen den benachbarten Poren größer ist als eine Dicke des Porenfilmabschnitts (42);
ein erstes Durchgangsloch (44), das so ausgebildet wird, dass es sich durch den Porenfilmabschnitt (42) erstreckt; und
ein zweites Durchgangsloch (45), das so ausgebildet wird, dass es sich durch den Porenskelettabschnitt (43) erstreckt,
wobei die Vielzahl von Poren (47) über das erste Durchgangsloch (44) und das zweite Durchgangsloch (45) miteinander in Verbindung stehen, und
wobei das Rohmaterial umfasst:
eine Vielzahl von Polyol-Gemischen unterschiedlicher Zusammensetzungen zum Ausbilden des ersten Durchgangslochs (44);
ein Polyisocyanat, das eine Polymerisationsreaktion mit dem Polyol-Gemisch durchläuft, um ein wärmeaushärtbares Urethanharz zu erzeugen, das den Porenfilmabschnitt (42) und den Porenskelettabschnitt (43) bildet;
ein Schaummittel zum Ausbilden der Poren (47); und
ein Pulver (46) zum Ausbilden des zweiten Durchgangslochs (45), wobei das Pulver (46) mit dem wärmeaushärtbaren Urethanharz inkompatibel ist.

11. Verfahren zum Herstellen eines wärmeisolierenden Kastens (21) nach Anspruch 10, wobei das Verfahren ferner das Verschließen der Gaszirkulationsöffnung, die an dem Wandkörper (23) angeordnet ist und durch die der wärmeisolierende Raum (10) mit dem Äußeren in Verbindung steht, mit einem Dichtungsmaterial umfasst.

12. Verfahren zum Herstellen eines wärmeisolierenden Kastens (21) nach Anspruch 11, wobei die Gaszirkulationsöffnung umfasst:
ein Luftloch (6) zum Ablassen von Luft aus dem wärmeisolierenden Raum (10) in dem Prozess des Füllens des wärmeisolierenden Raums (10) mit dem offenporigen Urethanschaum (4); und
eine Urethanflüssigkeit-Einspritzöffnung (5) zum Einspritzen des Rohmaterials,
wobei das Dichtungsmaterial umfasst:
ein Luftloch-Dichtungsmaterial (60, 61, 62) zum Verschließen des Luftlochs (6); und
ein Urethanflüssigkeit-Einspritzöffnung-Dichtungsmaterial (50, 51, 55) zum Verschließen der Urethanflüssigkeit-Einspritzöffnung (5),
und wobei das Verschließen der Gaszirkulationsöffnung mit dem Dichtungsmaterial umfasst:
Verschließen des Luftlochs (6) mit dem Luftloch-Dichtungsmaterial (60, 61, 62) nach dem Einspritzen des Rohmaterials aus der Urethanflüssigkeit-Einspritzöffnung (5) in den wärmeisolierenden Raum (10); und
Verschließen der Urethanflüssigkeit-Einspritzöffnung (5) mit dem Urethanflüssigkeit-Einspritzöffnung-Dichtungsmaterial (50, 51, 55) nach dem Verschließen des Luftlochs (6).

13. Verfahren zum Herstellen eines wärmeisolierenden Kastens (21) nach Anspruch 12, wobei die Gaszirkulationsöffnung ferner ein Auslassloch (58) zum Auspumpen des mit dem offenporigen Urethanschaum (4) gefüllten wärmeisolierenden Raums (10) umfasst,
wobei das Dichtungsmaterial ferner ein Auslassloch-Dichtungsmaterial zum Verschließen des Auslasslochs (58) umfasst,
wobei das Verfahren ferner das Auspumpen des wärmeisolierenden Raums (10) über das Auslassloch (58) nach dem Verschließen des Luftlochs (6) umfasst, und
wobei das Verschließen der Gaszirkulationsöffnung mit dem Dichtungsmaterial ferner das Verschließen des Auslasslochs (58) mit dem Auslassloch-Dichtungsmaterial nach Durchführung des Auspumpens umfasst.

14. Verfahren zum Herstellen eines wärmeisolierenden Kastens (21) nach einem der Ansprüche 10 bis 13, wobei das Verfahren ferner das Anordnen einer Gasadsorptionsvorrichtung (85) in dem wärmeisolierenden Raum (10) vordem Einspritzen des Rohmaterials umfasst.

## Revendications

1. Paroi d'isolation thermique comprenant:
un corps de paroi (23) dont la partie creuse est un espace d'isolation thermique (10);
un orifice de circulation de gaz qui est disposé sur le corps de paroi (23) et à travers lequel l'espace d'isolation thermique (10) communique avec l'extérieur;
une mousse d'uréthane à cellules ouvertes (4) d'une résine d'uréthane thermodurcissable avec laquelle l'espace d'isolation thermique (10) est rempli par moussage intégré; et
un matériau d'étanchéité pour sceller de manière étanche l'orifice de circulation de gaz,
dans laquelle la mousse d'uréthane à cellules ouvertes (4) comprend: une couche centrale (4c); et une couche de peau (4d) formée au voisinage d'une interface avec le corps de paroi (23) et entourant la couche centrale (4c),
chacune de la couche centrale (4c) et de la couche de peau (4d) comprend:
une pluralité de cellules (47);
une partie de film de cellule (42) qui est formée au niveau d'un emplacement où les cellules (47) sont adjacentes les unes aux autres;
une partie de squelette de cellule (43) qui est formée au niveau d'un emplacement où les cellules (47) sont adjacentes les unes aux autres et qui est formée d'une manière telle qu'une distance entre les cellules adjacentes est supérieure à une épaisseur de la partie de film de cellule (42);
un premier trou traversant (44) formé de manière à s'étendre à travers la partie de film de cellule (42); et
un second trou traversant (45) formé de manière à s'étendre à travers la partie de squelette de cellule (43),
la couche de peau (4d) contient un plus grand nombre de parties de squelette de cellule (43) que la couche centrale (4c),
la pluralité de cellules (47) communiquent les unes avec les autres à travers le premier trou traversant (44) et le second trou traversant (45), et
chacune de la couche centrale (4c) et de la couche de peau (4d) comprend en outre une poudre incompatible (46), ayant une taille de diamètre plus grande que l'épaisseur de la partie de squelette de cellule (43), le second trou traversant (45) étant formé au niveau d'une interface entre la résine d'uréthane thermodurcissable et la poudre incompatible (46), non adhéré à la résine d'uréthane thermodurcissable.

2. Boîte d'isolation thermique (21) comprenant une ou plusieurs des parois d'isolation thermique selon la revendication 1, dans laquelle le corps de paroi (23) comprend un boîtier externe (2) et un boîtier interne (3) stocké dans le boîtier externe (2).

3. Boîte d'isolation thermique (21) selon la revendication 2, dans laquelle l'orifice de circulation de gaz comprend:
un trou d'air (6) pour libérer de l'air à partir de l'espace d'isolation thermique (10) dans le procédé de remplissage de l'espace d'isolation thermique (10) avec la mousse d'uréthane à cellules ouvertes (4); et
un orifice d'injection de liquide d'uréthane (5) pour injecter la matière première de la mousse d'uréthane à cellules ouvertes (4) dans l'espace d'isolation thermique (10), et
le matériau d'étanchéité comprend:
un matériau d'étanchéité de trou d'air (60, 61, 62) pour sceller de manière étanche le trou d'air (6); et
un matériau d'étanchéité d'orifice d'injection de liquide d'uréthane (50, 51, 55) pour sceller de manière étanche l'orifice d'injection de liquide d'uréthane (5).

4. Boîte d'isolation thermique (21) selon la revendication 3, dans laquelle la taille de trou du trou d'air (6) est inférieure à la taille de trou de l'orifice d'injection de liquide d'uréthane (5).

5. Boîte d'isolation thermique (21) selon la revendication 3 ou 4, dans laquelle le trou d'air (6) est disposé dans le boîtier interne (3), et
l'orifice d'injection de liquide d'uréthane (5) est disposé dans le boîtier externe (2).

6. Boîte d'isolation thermique (21) selon l'une quelconque des revendications 3 à 5, dans laquelle l'orifice de circulation de gaz comprend en outre un trou d'échappement (58) pour évacuer l'espace d'isolation thermique (10), et
le matériau d'étanchéité comprend en outre un matériau d'étanchéité de trou d'échappement pour sceller de manière étanche le trou d'échappement (58).

7. Boîte d'isolation thermique (21) selon la revendication 6, dans laquelle l'orifice d'injection de liquide d'uréthane (5) est également utilisé en tant que trou d'échappement (58).

8. Boîte d'isolation thermique selon l'une quelconque des revendications 2 à 7, comprenant en outre un dispositif d'adsorption de gaz (85) disposé dans l'espace d'isolation thermique (10).

9. Boîte d'isolation thermique selon la revendication 8, dans laquelle le dispositif d'adsorption de gaz (85) comprend un adsorbant qui adsorbe un gaz de dioxyde de carbone, et
l'adsorbant comprend une zéolithe ZSM-5 ayant subi un échange d'ions avec au moins l'un parmi le baryum et le strontium.

10. Procédé de production d'une boîte d'isolation thermique (21) comprenant:
la formation d'un espace d'isolation thermique (10) à l'aide d'un corps de paroi (23); et
l'injection d'une matière première d'une mousse d'uréthane à cellules ouvertes (4) dans l'espace d'isolation thermique (10), dans lequel
la mousse d'uréthane à cellules ouvertes (4) avec laquelle l'espace d'isolation thermique (10) est rempli par moussage et moulage intégrés de la matière première et du corps de paroi (23) comprend:
une pluralité de cellules (47);
une partie de film cellulaire (42) qui est formée au niveau d'un emplacement où les cellules (47) sont adjacentes les unes aux autres;
une partie de squelette de cellule (43) qui est formée au niveau d'un emplacement où les cellules (47) sont adjacentes les unes aux autres et qui est formée d'une manière telle qu'une distance entre les cellules adjacentes est supérieure à une épaisseur de la partie de film de cellule (42);
un premier trou traversant (44) formé de manière à s'étendre à travers la partie de film de cellule (42); et
un second trou traversant (45) formé de manière à s'étendre à travers la partie de squelette de cellule (43),
la pluralité de cellules (47) communiquent les unes avec les autres à travers le premier trou traversant (44) et le second trou traversant (45), et
la matière première comprend:
une pluralité de mélanges de polyols de compositions différentes pourformer le premier trou traversant (44);
un polyisocyanate qui subit une réaction de polymérisation avec le mélange de polyols pour générer une résine d'uréthane thermodurcissable qui forme la partie de film de cellule (42) et la partie de squelette de cellule (43);
un agent moussant pour former les cellules (47); et
une poudre (46) pour former le second trou traversant (45), la poudre (46) étant incompatible avec la résine d'uréthane thermodurcissable.

11. Procédé de production d'une boîte d'isolation thermique (21) selon la revendication 10, le procédé comprenant en outre le scellement étanche avec un matériau d'étanchéité de l'orifice de circulation de gaz qui est disposé sur le corps de paroi (23) et à travers lequel l'espace d'isolation thermique (10) communique avec l'extérieur.

12. Procédé de production d'une boîte d'isolation thermique (21) selon la revendication 11, dans lequel l'orifice de circulation de gaz comprend:
un trou d'air (6) pour libérer de l'air à partir de l'espace d'isolation thermique (10) dans le procédé de remplissage de l'espace d'isolation thermique (10) avec la mousse d'uréthane à cellules ouvertes (4); et
un orifice d'injection de liquide d'uréthane (5) pour injecter la matière première,
le matériau d'étanchéité comprend:
un matériau d'étanchéité de trou d'air (60, 61, 62) pour sceller de manière étanche le trou d'air (6); et
un matériau d'étanchéité d'orifice d'injection de liquide d'uréthane (50, 51, 55) pour sceller de manière étanche l'orifice d'injection de liquide d'uréthane (5), et
le scellement étanche de l'orifice de circulation de gaz avec le matériau d'étanchéité comprend:
le scellement étanche du trou d'air (6) avec le matériau d'étanchéité de trou d'air (60, 61, 62) après l'injection de la matière première à partir de l'orifice d'injection de liquide d'uréthane (5) dans l'espace d'isolation thermique (10); et
le scellement étanche de l'orifice d'injection de liquide d'uréthane (5) avec le matériau d'étanchéité d'orifice d'injection de liquide d'uréthane (50, 51, 55) après avoir scellé de manière étanche le trou d'air (6).

13. Procédé de production d'une boîte d'isolation thermique (21) selon la revendication 12, dans lequel l'orifice de circulation de gaz comprend en outre un trou d'échappement (58) pour évacuer l'espace d'isolation thermique (10) rempli avec la mousse d'uréthane à cellules ouvertes (4),
le matériau d'étanchéité comprend en outre un matériau d'étanchéité de trou d'échappement pour sceller de manière étanche le trou d'échappement (58),
le procédé comprend en outre l'évacuation de l'espace d'isolation thermique (10) à travers le trou d'échappement (58) après avoir scellé de manière étanche le trou d'air (6), et
le scellement étanche de l'orifice de circulation de gaz avec le matériau d'étanchéité comprend en outre le scellement étanche du trou d'échappement (58) avec le matériau d'étanchéité de trou d'échappement après la mise en oeuvre de l'évacuation.

14. Procédé de production d'une boîte d'isolation thermique (21) selon l'une quelconque des revendications 10 à 13, le procédé comprenant en outre la disposition d'un dispositif d'adsorption de gaz (85) dans l'espace d'isolation thermique (10) avant l'injection de la matière première.
